# EUROPEAN PATENT APPLICATION

(11) **EP 4 675 544 A1**
(43) Date of publication of application: **07.01.2026**
(21) Application number: 24315329.3
(22) Date of filing: 05.07.2024
(51) Int. Cl.: G06Q 50/47, G06Q 10/02, G06Q 10/0631

(54) **DEVICE, SYSTEM AND METHOD FOR REQUEST MATCHING TO REDUCE VEHICLE TRAFFIC**

(71) Applicant: Amadeus S.A.S., 06410 Biot (FR)
(72) Inventor: HAYS, Jean-Chafic, 06410 Biot (FR); BOUILLON, Philippe, 06410 Biot (FR); MEHSEIN, Johan, 06410 Biot (FR); DELISSER, Jonathan, 06410 Biot (FR)
(74) Representative: Samson & Partner Patentanwälte mbB

(57) **Abstract**

A computing device receives a first request that includes a first identifier of a first provider object, and a first location identifier, and adjusts a first initial time associated with the first provider object, determining a first adjusted time. The computing device matches the first request with a second request based on the first adjusted time and the first location identifier, the second request associated with: a second initial time or a second adjusted time; and a second location identifier. The computing devices notifies respective communication devices of the match, accordingly, later determines that the first initial time has changed, and updates the first adjusted time to a first updated adjusted time. When the requests no longer match, the computing devices cancels the match, matches the first request with a third request based on the first updated adjusted time and the first location identifier, and notifies respective communication devices accordingly.

## Description

### FIELD

The specification relates generally to the environment, and specifically to a device, system and method for request matching to reduce vehicle traffic.

### BACKGROUND

Personal vehicles are used at 5% of their capacity. Transportation contributes 29% of world pollution of which 54% is due to vehicle usage. Furthermore, there is a high density of personal vehicles in the world (e.g., 1.4 billion personal vehicles), with 6.5% growth each year. Hence, inefficient use of personal vehicles may be contributing to world pollution and such contribution is growing rapidly.

### SUMMARY

A first aspect of the present specification provides a method comprising: receiving, via a computing device, a first request that includes a first provider object identifier of a first provider object, and a first location identifier; retrieving, via the computing device, from one or more of a provider system and a historical database, using the first provider object identifier, a first initial time associated with the first provider object; adjusting, via the computing device, the first initial time based on historical data retrieved from one or more of the provider system and the historical database, to determine a first adjusted time that is different from the first initial time, the first adjusted time determined from data associated with the first provider object stored at one or more of the provider system and the historical database; accessing, via the computing device, at least one request matching database to match the first request with a second request based on the first adjusted time and the first location identifier, the second request associated with: a second initial time or a second adjusted time; and a second location identifier; providing, via the computing device, to respective communication devices associated with the first request and the second request, respective notifications of the match between the first request and the second request; receiving, via the computing device, from the provider system, a notification that the first initial time has changed to a different first initial time; updating, via the computing device, based on the different first initial time, the first adjusted time to a first updated adjusted time; determining, via the computing device, that the first request and the second request no longer match; and, in response: cancelling, via the computing device, the match between the first request and the second request; accessing, via the computing device, the at least one request matching database to match the first request with a third request based on the first updated adjusted time and the first location identifier; and providing, via the computing device, to the respective communication devices associated with the first request and the third request, respective notifications of the match between the first request and the third request.

The method of the first aspect may further comprise, in response to determining that the first request and the second request no longer match: accessing, via the computing device, the at least one request matching database to match the second request with a fourth request based on the second adjusted time, or the second initial time, and the second location identifier; and providing, via the computing device, to the respective communication devices associated with the second request and the fourth request, respective notifications of the match between the second request and the fourth request.

At the method of the first aspect, cancelling the match between the first request and the second request may comprise: providing to the respective communication devices associated with the first request and the second request, respective updated notifications that the first request and the second request no longer match, the respective updated notifications including the first updated adjusted time; receiving from one or more of the respective communication devices associated with the first request and the second request, a cancel request to cancel the match between the first request and the second request; and cancelling the request in response to receiving the cancel request. In some of these examples, the method of the first aspect may further comprise, in response to providing to the respective communication devices associated with the first request and the second request, the respective updated notifications that the first request and the second request no longer match: receiving a maintain request from one or both of the respective communication devices associated with the first request and the second request; and maintaining the match between the first request and the second request.

The method of the first aspect may further comprise: receiving the second request that includes a second provider object identifier of a second provider object, and the second location identifier; retrieving, via the computing device, from one or more of a respective provider system and the historical database, using the second provider object identifier, the second initial time associated with the second provider object; and adjusting, via the computing device, the second initial time based on respective historical data retrieved from one or more of the respective provider system and the historical database, to determine the second adjusted time that is different from the second initial time, and wherein the match between the first request and the second request is based on the second adjusted time.

At the method of the first aspect, the first request may identify a given request matching database, and accessing the at least one request matching database to match the first request with the second request comprises accessing on the given request matching database identified in the first request.

The method of the first aspect may further comprise: tagging the first request and the second request, stored at the at least one request matching database, with an identifier of the computing device, to one or more of: enable access of the computing device to the first request and the second request, stored at the at least one request matching database; and cause prioritization of matching between the first request and the second request over other requests not tagged with the identifier of the computing device.

At the method of the first aspect, adjusting the first initial time based on the historical data retrieved from one or more of the provider system and the historical database, to determine the first adjusted time may comprise adding one or more time periods to the first initial time, and the one or more time periods may comprise one or more of: a first time period determined from historical changes to the first initial time; a second time period associated with a phase in which the first initial time is located; and a third time period associated with a displacement between an initial location associated with the first initial time and a first location associated with the first location identifier.

At the method of the first aspect, the respective notifications of the match between the first request and the second request may include a blackout communication time period based on the first provider object.

The method of the first aspect may further comprise: updating the historical data based on adjusted times.

A second aspect of the present specification provides computing device comprising: a communication interface; a controller; and a computer-readable storage medium having stored thereon program instructions that, when executed by the controller, causes the controller to perform a set of operations comprising: receiving, via the communication interface, a first request that includes a first provider object identifier of a first provider object, and a first location identifier; retrieving, from one or more of a provider system and a historical database, using the first provider object identifier, a first initial time associated with the first provider object; adjusting the first initial time based on historical data retrieved from one or more of the provider system and the historical database, to determine a first adjusted time that is different from the first initial time, the first adjusted time determined from data associated with the first provider object stored at one or more of the provider system and the historical database; accessing at least one request matching database to match the first request with a second request based on the first adjusted time and the first location identifier, the second request associated with: a second initial time or a second adjusted time; and a second location identifier; providing, via the communication interface, to respective communication devices associated with the first request and the second request, respective notifications of the match between the first request and the second request; receiving, from the provider system, a notification that the first initial time has changed to a different first initial time; updating, based on the different first initial time, the first adjusted time to a first updated adjusted time; determining that the first request and the second request no longer match; and, in response: cancelling the match between the first request and the second request; accessing the at least one request matching database to match the first request with a third request based on the first updated adjusted time and the first location identifier; and providing, via the communication interface, to the respective communication devices associated with the first request and the third request, respective notifications of the match between the first request and the third request.

At the computing device of the second aspect, the set of operations may further comprise, in response to determining that the first request and the second request no longer match: accessing, via the computing device, the at least one request matching database to match the second request with a fourth request based on the second adjusted time, or the second initial time, and the second location identifier; and providing, via the computing device, to the respective communication devices associated with the second request and the fourth request, respective notifications of the match between the second request and the fourth request.

At the computing device of the second aspect, cancelling the match between the first request and the second request may comprise: providing to the respective communication devices associated with the first request and the second request, respective updated notifications that the first request and the second request no longer match, the respective updated notifications including the first updated adjusted time; receiving from one or more of the respective communication devices associated with the first request and the second request, a cancel request to cancel the match between the first request and the second request; and cancelling the request in response to receiving the cancel request. In some of these examples, at the computing device of the second aspect, the set of operations may further comprise, in response to providing to the respective communication devices associated with the first request and the second request, the respective updated notifications that the first request and the second request no longer match: receiving a maintain request from one or both of the respective communication devices associated with the first request and the second request; and maintaining the match between the first request and the second request.

At the computing device of the second aspect, the set of operations may further comprise: receiving the second request that includes a second provider object identifier of a second provider object, and the second location identifier; retrieving, via the computing device, from one or more of a respective provider system and the historical database, using the second provider object identifier, the second initial time associated with the second provider object; and adjusting, via the computing device, the second initial time based on respective historical data retrieved from one or more of the respective provider system and the historical database, to determine the second adjusted time that is different from the second initial time, and wherein the match between the first request and the second request is based on the second adjusted time.

At the computing device of the second aspect, the first request may identify a given request matching database, and accessing the at least one request matching database to match the first request with the second request may comprise accessing on the given request matching database identified in the first request.

At the computing device of the second aspect, the set of operations may further comprise: tagging the first request and the second request, stored at the at least one request matching database, with an identifier of the computing device, to one or more of: enable access of the computing device to the first request and the second request, stored at the at least one request matching database; and cause prioritization of matching between the first request and the second request over other requests not tagged with the identifier of the computing device.

At the computing device of the second aspect, adjusting the first initial time based on the historical data retrieved from one or more of the provider system and the historical database, to determine the first adjusted time may comprise adding one or more time periods to the first initial time, and the one or more time periods may comprise one or more of: a first time period determined from historical changes to the first initial time; a second time period associated with a phase in which the first initial time is located; and a third time period associated with a displacement between an initial location associated with the first initial time and a first location associated with the first location identifier.

At the computing device of the second aspect, the respective notifications of the match between the first request and the second request may include a blackout communication time period based on the first provider object.

At the computing device of the second aspect, the set of operations may further comprise: updating the historical data based on adjusted times.

A third aspect of the present specification provides a non-transitory computer-readable storage medium having stored thereon program instructions that, when executed by at least one computing device, causes the at least one computing device to perform a method comprising: receiving, via a computing device, a first request that includes a first provider object identifier of a first provider object, and a first location identifier; retrieving, via the computing device, from one or more of a provider system and a historical database, using the first provider object identifier, a first initial time associated with the first provider object; adjusting, via the computing device, the first initial time based on historical data retrieved from one or more of the provider system and the historical database, to determine a first adjusted time that is different from the first initial time, the first adjusted time determined from data associated with the first provider object stored at one or more of the provider system and the historical database; accessing, via the computing device, at least one request matching database to match the first request with a second request based on the first adjusted time and the first location identifier, the second request associated with: a second initial time or a second adjusted time; and a second location identifier; providing, via the computing device, to respective communication devices associated with the first request and the second request, respective notifications of the match between the first request and the second request; receiving, via the computing device, from the provider system, a notification that the first initial time has changed to a different first initial time; updating, via the computing device, based on the different first initial time, the first adjusted time to a first updated adjusted time; determining, via the computing device, that the first request and the second request no longer match; and, in response: cancelling, via the computing device, the match between the first request and the second request; accessing, via the computing device, the at least one request matching database to match the first request with a third request based on the first updated adjusted time and the first location identifier; and providing, via the computing device, to the respective communication devices associated with the first request and the third request, respective notifications of the match between the first request and the third request.

At the non-transitory computer-readable storage medium of the third aspect, the method may further comprise, in response to determining that the first request and the second request no longer match: accessing, via the computing device, the at least one request matching database to match the second request with a fourth request based on the second adjusted time, or the second initial time, and the second location identifier; and providing, via the computing device, to the respective communication devices associated with the second request and the fourth request, respective notifications of the match between the second request and the fourth request.

At the non-transitory computer-readable storage medium of the third aspect, cancelling the match between the first request and the second request may comprise: providing to the respective communication devices associated with the first request and the second request, respective updated notifications that the first request and the second request no longer match, the respective updated notifications including the first updated adjusted time; receiving from one or more of the respective communication devices associated with the first request and the second request, a cancel request to cancel the match between the first request and the second request; and cancelling the request in response to receiving the cancel request. In some of these examples, at the non-transitory computer-readable storage medium of the third aspect, the method may further comprise, in response to providing to the respective communication devices associated with the first request and the second request, the respective updated notifications that the first request and the second request no longer match: receiving a maintain request from one or both of the respective communication devices associated with the first request and the second request; and maintaining the match between the first request and the second request.

At the non-transitory computer-readable storage medium of the third aspect, the method may further comprise: receiving the second request that includes a second provider object identifier of a second provider object, and the second location identifier; retrieving, via the computing device, from one or more of a respective provider system and the historical database, using the second provider object identifier, the second initial time associated with the second provider object; and adjusting, via the computing device, the second initial time based on respective historical data retrieved from one or more of the respective provider system and the historical database, to determine the second adjusted time that is different from the second initial time, and wherein the match between the first request and the second request is based on the second adjusted time.

At the non-transitory computer-readable storage medium of the third aspect, the first request may identify a given request matching database, and accessing the at least one request matching database to match the first request with the second request comprises accessing on the given request matching database identified in the first request.

At the non-transitory computer-readable storage medium of the third aspect, the method may further comprise: tagging the first request and the second request, stored at the at least one request matching database, with an identifier of the computing device, to one or more of: enable access of the computing device to the first request and the second request, stored at the at least one request matching database; and cause prioritization of matching between the first request and the second request over other requests not tagged with the identifier of the computing device.

At the non-transitory computer-readable storage medium of the third aspect, adjusting the first initial time based on the historical data retrieved from one or more of the provider system and the historical database, to determine the first adjusted time may comprise adding one or more time periods to the first initial time, and the one or more time periods may comprise one or more of: a first time period determined from historical changes to the first initial time; a second time period associated with a phase in which the first initial time is located; and a third time period associated with a displacement between an initial location associated with the first initial time and a first location associated with the first location identifier.

At the non-transitory computer-readable storage medium of the third aspect, the respective notifications of the match between the first request and the second request may include a blackout communication time period based on the first provider object.

At the non-transitory computer-readable storage medium of the third aspect, the method may further comprise: updating the historical data based on adjusted times.

### BRIEF DESCRIPTIONS OF THE DRAWINGS

For a better understanding of the various examples described herein and to show more clearly how they may be carried into effect, reference will now be made, by way of example only, to the accompanying drawings in which:
FIG. 1 depicts a system for request matching to reduce vehicle traffic, according to non-limiting examples.
FIG. 2 depicts a computing device for request matching to reduce vehicle traffic, according to non-limiting examples.
FIG. 3 depicts a first portion of a method for request matching to reduce vehicle traffic, according to non-limiting examples.
FIG. 4 depicts a second portion of the method of FIG. 3, according to non-limiting examples.
FIG. 5 depicts the system of FIG. 1 implementing a method for request matching to reduce vehicle traffic, according to non-limiting examples.
FIG. 6 depicts the system of FIG. 1 implementing further aspects of a method for request matching to reduce vehicle traffic, according to non-limiting examples.
FIG. 7 depicts the system of FIG. 1 implementing further aspects of a method for request matching to reduce vehicle traffic, according to non-limiting examples.
FIG. 8 depicts the system of FIG. 1 implementing further aspects of a method for request matching to reduce vehicle traffic, according to non-limiting examples.
FIG. 9 depicts the system of FIG. 1 implementing further aspects of a method for request matching to reduce vehicle traffic, according to non-limiting examples.
FIG. 10 depicts the system of FIG. 1 implementing further aspects of a method for request matching to reduce vehicle traffic, according to non-limiting examples.
FIG. 11 depicts the system of FIG. 1 implementing further aspects of a method for request matching to reduce vehicle traffic, according to non-limiting examples.
FIG. 12 depicts the system of FIG. 1 implementing further aspects of a method for request matching to reduce vehicle traffic, according to non-limiting examples.
FIG. 13 depicts the system of FIG. 1 implementing further aspects of a method for request matching to reduce vehicle traffic, according to non-limiting examples.

### DETAILED DESCRIPTION

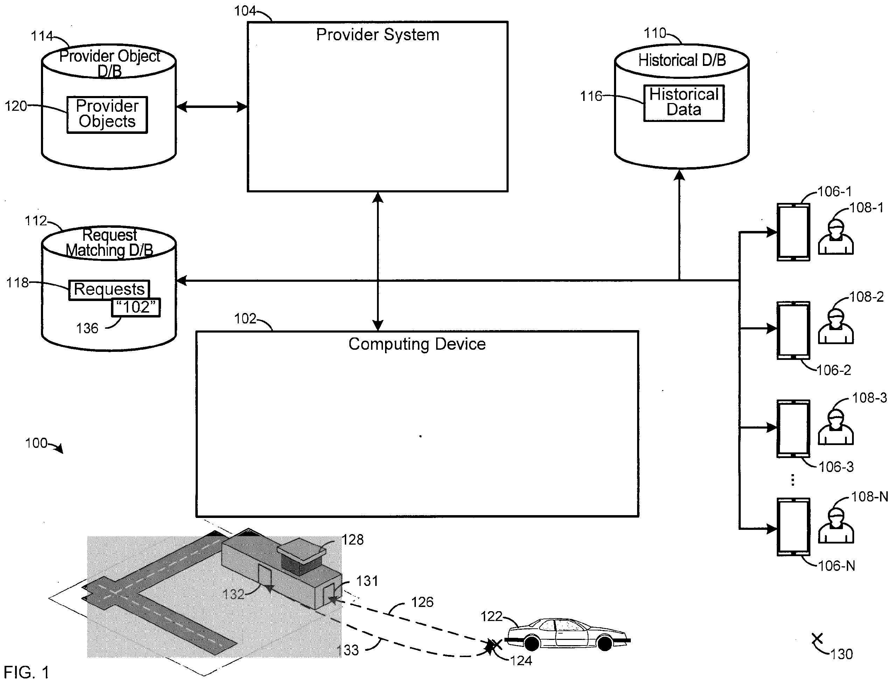

FIG. 1 depicts a system 100 for request matching to reduce vehicle traffic. The various components of the system 100 are in communication via any suitable combination of wired and/or wireless communication links, and communication links between components of the system 100 are depicted in FIG. 1, and throughout the present specification, as double-ended arrows between respective components. The communication links may include any suitable combination of wireless and/or wired links and/or wireless and/or wired communication networks, and the like.

The system 100 comprises a computing device 102 communicatively coupled to a provider system 104, and a plurality of communication devices 106-1, 106-2...106-N (interchangeably referred to hereafter, collectively, as the communication devices 106 and, generically, as a communication device 106; this convention will be used elsewhere in the present specification). As depicted, the communication devices 106 are associated with, and/or operated by, respective users 108-1, 108-2, 108-3...108-N (e.g., users 108 and/or a user 108). A number "N" of the communication devices 106, and respective users 108, may be any suitable number, and may be on the order of tens, hundreds, thousands or hundreds of thousands, and/or any other suitable number.

The system 100 further comprises a historical database 110 (e.g., with the term "database" referred to as "D/B" in the FIG. 1), a request matching database 112, and a provider object database 114.

As depicted, the computing device 102 is communicatively coupled to at least the request matching database 112 and the historical database 110, though access to the historical database 110 by the computing device 102 may be via the provider system 104. As depicted, the provider system 104 is communicatively coupled to the provider object database 114.

Furthermore, access to the request matching database 112 by the computing device 102 may be via a computing device (not depicted) operated by an entity associated with and/or managing the request matching database 112.

As used herein, the term "provider object" may refer to data objects and/or data records which correspond to products and/or items, such as travel-related goods and services (e.g., flights, hotel reservations, train reservations, bus reservations, ship and/or ferry reservations, car rentals and the like), provided by a provider system, such as the provider system 104. More specifically, the products and/or items discussed in the examples below may be flight tickets, train tickets, bus tickets, ship and/or ferry reservations, car reservations and the like, amongst other possibilities, and, hence a provider object may identify associated locations and times, that may include, but are not limited to, associated departure locations and destinations, and respective departure times and destination arrival times. The provider objects may be in any suitable format including, but not limited to Edifact recommendations in the context of Global Distribution System (GDS)-based data exchange, offer records in the context of New Distribution Capability (NDC)-based data exchange, and/or any other suitable format. Indeed, the provider objects may comprise data objects and/or data records, for example stored as an Edifact recommendation or an NDC offer, and/or any other suitable data representing at least one item provided by the provider system 104, or any other suitable provider system. Furthermore, provider objects corresponding to travel may include certain types of provider object identifiers, such as flight numbers, a reservation number, a booking reference number, and the like.

Furthermore, in this context, the term "provider system" may refer to any system that provides the aforementioned provider objects, and such provider systems may be operated by any suitable entity, such as airlines, train companies, bus companies, ship and/or ferry companies, car reservation companies, amongst other possibilities.

Hereafter, for simplicity, examples will be provided with respect to provider objects representing flights, and with the provider system 104, and any other suitable components of the system 100 adapted accordingly, though any suitable provider objects that may include a destination and an associated arrival time (e.g., and date) are within the scope of the present specification.

Furthermore, while only one provider system 104 and one provider object database 114 is depicted, the system 100 may comprise a plurality of provider systems and associated provider object databases (e.g., storing provider objects of respective provider systems), and the computing device 102 may be communicatively coupled to such a plurality of provider systems and/or provider object databases.

The computing device 102 may comprise any suitable combination of one or more servers, one or more cloud computing devices, and the like, or any other combination of suitable computing devices. Similarly, the provider system 104 may comprise any suitable combination of one or more servers, one or more cloud computing devices, and the like, or any other combination of suitable computing devices.

Furthermore, the computing device 102 may be operated by an entity providing intermediary services between the communication devices 106 and the provider system 104 (e.g., and/or a plurality of provider system), and/or the computing device 102 may be operated by an entity providing intermediary services between the communication devices 106 and an entity operating the request matching database 112, as described herein.

A communication device 106 may comprise a cell phone, a laptop computer, a tablet, or any other suitable mobile device. In some examples, the communication devices 106 may comprise location determining devices, such as Global Positioning System (GPS) devices, that may report their location periodically, and the like, to the computing device 102.

The databases 110, 112, 114 may be components of any suitable memory of the system 100. For example, the historical database 110 may be maintained by one or more of the computing device 102 and the provider system 104, and may be a component of one or more memories thereof, and/or the historical database 110 may be fully, or partially, maintained at one or more memories external to the computing device 102 and the provider system 104. Similarly, the request matching database 112 may be maintained by one or more of the computing device 102 and a computing device operated by an entity managing the request matching database 112, and may be a component of one or more memories thereof, and/or the request matching database 112 may be fully, or partially, maintained at one or more memories external to the computing device 102 and/or a computing device operated by an entity managing the request matching database 112. Similarly, the provider object database 114 may be maintained by the provider system 104, and may be a component of one or more memories thereof, and/or the provider object database 114 may be fully, or partially, maintained at one or more memories external to the provider system 104.

As depicted, the historical database 110 stores historical data 116, the request matching database 112 stores requests 118, and the provider object database 114 stores provider objects 120.

In particular, the provider objects 120 may be associated with respective users 108. For example, a user 108 may operate a respective communication device 106 to communicate with the provider system 104, and/or any suitable intermediary device (e.g., which may include, but is not limited to, one or more of the computing device 102, a server operating a web-based travel booking site, and the like), to generate a respective provider object 120. In a particular example, a user 108 may book one or more particular flights between an originating location and a destination at a particular time and date etc., including but not limited to, return flights, and a given provider object 120 may represent such a flight and/or flights. In particular, a given provider object 120 may indicate a destination and an associated arrival time (e.g., which may include both a given date and a given time on the given date at which flight arrives) for a given flight booked by a user 108.

In particular, a current provider object 120 may comprise a provider object for which an associated service (e.g., a flight) is currently being provided, or is going to be provided in the future. Once an associated service ends (e.g., a flight lands), an associated provider object 120 may no longer be "current", and may be moved to an archive (e.g., such as the historical database 110) by the provider system 104, marked as no longer current and/or expired, by the provider system 104, at the provider object database 114, and the like, however such actions may occur within a given time period after the associated service ends (e.g., within 1 hour, within 12 hours, within 24 hours, amongst other possibilities). Hence, the historical data 116 may comprise expired provider objects 120 and/or information therefrom, including, but not limited to, whether or not associated destination arrival times were late or early, and the like, however such information may alternatively be stored at the provider object database 114.

It is furthermore understood that, in the example of FIG. 1, some users 108 are associated with vehicles, such as a vehicle 122, that may be parked at a location 124, that is a distance 126 from an airport terminal 128. For example, the vehicle 122 may be associated with, and/or belong to, and the like, one of the users 108, such as the user 108-1, who is referred to hereafter, for clarity, as the first user 108-1. Indeed, hereafter, for simplicity, it is understood that the vehicle 122 is associated with the first user 108-1. For example, the first user 108-1 may have driven to the airport terminal 128 using the vehicle 122, parked the vehicle 122 at the location 124, and taken a flight from the airport terminal 128; furthermore, in present examples, it is understood that the first user 108-1 may return to the airport terminal 128 on a return flight, and intends to arrive, walk and/or travel to the vehicle 122 at the location 124, and drive home (and/or to any other suitable location), for example to another location 130 (e.g., which may comprise an address, an area, a town, a city, and like, amongst other possibilities). As such, the location 124 may be a parking lot and/or garage nearby the airport terminal 128. However, the location 124 may be more specific, such as a particular parking stall at a parking lot, and the like.

Alternatively, the vehicle 122 may be a rental vehicle at a location 124 of a vehicle rental agency, and the first user 108-1 may have booked the vehicle 122 for use upon arrival at the airport terminal 128.

Furthermore, the distance 126 may be a walking distance from the airport terminal 128 (e.g., less than 1 or 2 kilometers, and/or a distance that an average person may walk in 15 to 20 minutes) and/or the distance 126 may be a shuttle distance from the airport terminal 128 (e.g., less than 5 to 10 kilometers, and/or a distance that an airport shuttle may drive in 15 to 20 minutes). However, the distance 126 may be any suitable distance. For example, the distance 126 may be a distance that the first user 108-1 associated with the vehicle 122 may travel to retrieve and operate the vehicle 122 once the first user 108-1 has arrived at the airport terminal 128 in accordance with an associated provider object 120.

In particular, as depicted, the airport terminal 128 has two gates 131, 132, and, as depicted, the distance 126 may be a distance from a first gate 131. Similarly, the location 124 of the vehicle 122 is a distance 133 from a second gate 132, with the distance 133 being greater than, and/or different from, the distance 126. While for simplicity the gates 131, 132 are depicted as being on the outside of the airport terminal 128, users 108 exiting flights are understood to enter the airport terminal 128 via the gates 131, 132. Hence, the distances 126, 133 are understood to be drawn in the depicted configurations only for simplicity, and any users 108 traveling to the location 124 generally enter the airport terminal 128 via one of the gates 131, 132, travel through the airport terminal 128 to an exit (not depicted), and travel in any suitable manner to the location 124.

Furthermore, the computing device 102 may be enabled to determine and/or predict, from provider objects 120 and/or the historical data 116, which gate 131, 132 the first user 108-1, or any other users 108, may use when arriving at the airport terminal 128. For example, an associated provider object 120 and/or historical data 116, may indicate which gate 131, 132 of the airport terminal 128 is scheduled to service a particular flight of a user 108 and/or which gate 131, 132 of the airport terminal 128 that has historically serviced previous flights having the same flight number.

However, in other examples, the airport terminal 128 may include only one gate, such as the gate 131).

Hence, the airport terminal 128 may be a destination associated with two or more of the provider objects 120, including a first provider object 120 associated with the first user 108-1, and a second provider object 120 associated with another user 108, such as the user 108-2 (e.g., for clarity, interchangeably referred to hereafter as the second user 108-2). Put another way, the airport terminal 128 may be a destination for at least two of the users 108 as defined by a commensurate number of respective provider objects 120. Indeed, in present examples, a third provider object 120 may indicate the airport terminal 128 as a destination for yet a third user 108, such as the third user 108-3.

The requests 118 may be requests to travel to a particular location, for example from the airport terminal 128 to the location 130, and may include respective provider object identifiers and suitable location identifiers.

The provider object identifier of an associated provider object 120 may include, but is not limited to a reservation number, a booking reference number, and the like, that is associated with a destination, such as the airport terminal 128.

Alternatively, or in addition, the provider object identifier may include a flight number, and the like, associated with a provider object 120, as well as an associated date (e.g., a date that the second user 108-2 is taking the flight defined by the flight number).

In particular, the provider object identifier may include any suitable identifier that may generally enable the computing device 102 to retrieve the associated destination and respective arrival time from an associated provider object 120 via the provider system 104.

As will be explained hereafter, the first user 108-1 may operate the first communication device 106-1 to generate a respective request 118 offering a ride from the airport terminal 128 to the location 130 via the vehicle 122. Such a respective request 118 may include a provider object identifier of a respective provider object 120, and a location identifier of at least the location 130; the respective request 118 generally further identifies the location 124 at which the vehicle 122 is located. Put another way, the respective request 118 may identify (e.g., via a provider object identifier) the destination of the airport terminal 128 and the respective arrival time of a flight which the first user 108-1 is taking, as well as the location 130 to which the first user 108-1 is intending to drive the vehicle 122, and the location 124 of the vehicle 122.

Similarly, the second user 108-2 may operate the second communication device 106-2 to generate a respective request 118 to travel from the airport terminal 128 to the location 130. Such a respective request 118 may include a provider object identifier of an associated provider object 120, and a location identifier, such as an identifier of the location 130 to which the second user 108-2 wants to travel from the airport terminal 128.

Returning to the respective request 118 associated with the first user 108-1, The computing device 102 receives the respective request 118 from the first communication device 106-1, and may use the associated provider object identifier to retrieve, from the provider system 104, an initial time associated with the provider object 120 identified by the associated provider object identifier. Such an initial time may comprise the arrival time of an associated flight at the airport terminal 128.

Alternatively, or in addition, the computing device 102 may use the associated provider object identifier to retrieve, from the historical database 110, the first initial time associated with the provider object 120 identified by the associated provider object identifier. For example, the historical data 116 stored at the historical database 110 may store historical arrival times associated with provider objects 120. Hence, when the provider object identifier identifies a flight number, and the like, and an associated date, the historical data 116 may be searched to find an associated arrival time of previous flights having the same flight number. Indeed, as previously mentioned, the historical data 116 may include, but is not limited to, historical provider objects 120 and/or data therefrom, and the like. For example, the historical data 116 may further include records and/or data of when flights were delayed, and the like.

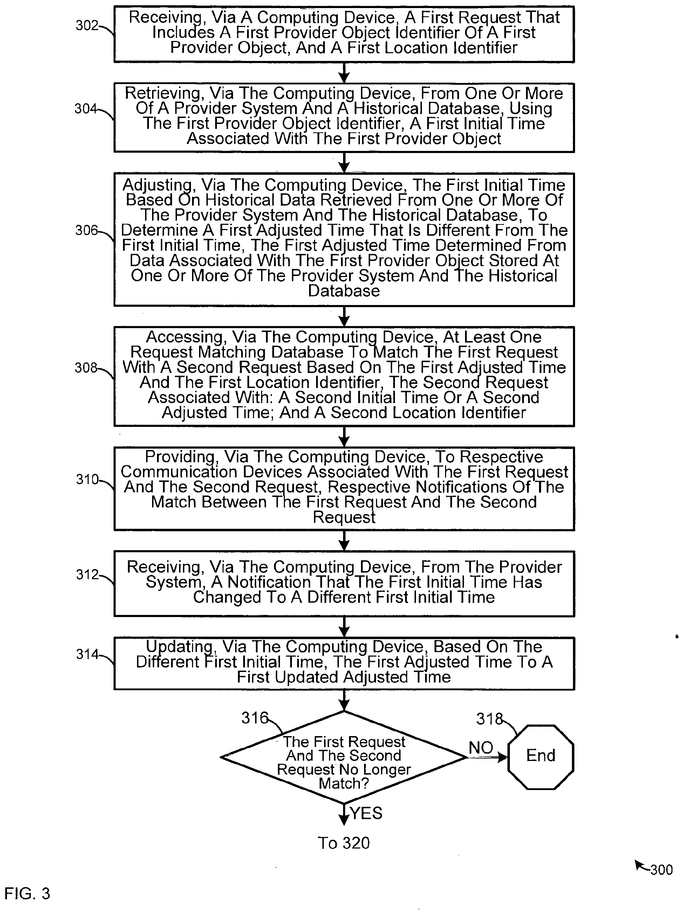

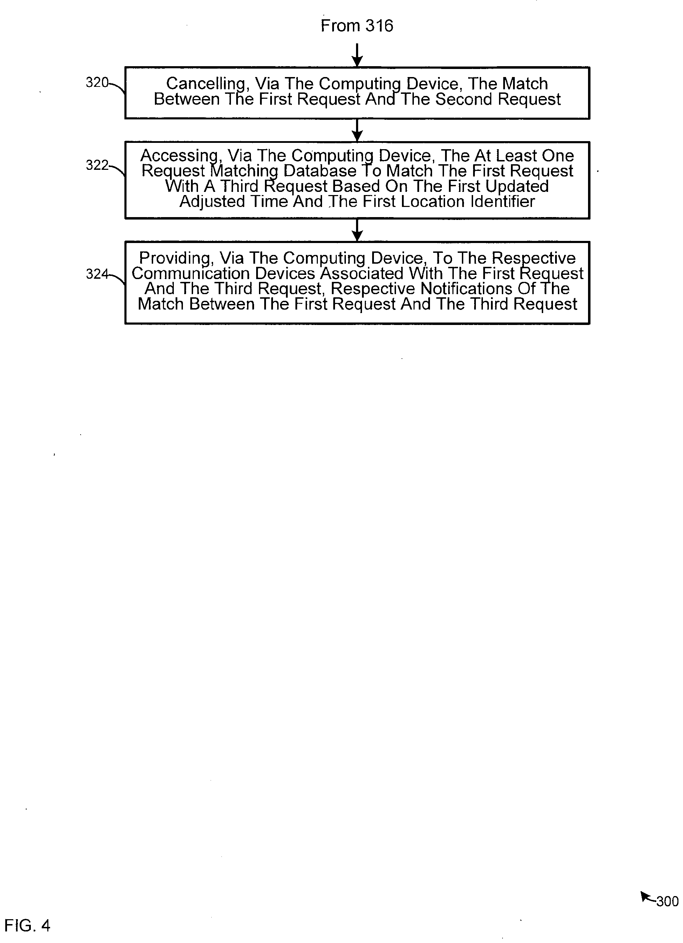

Furthermore, the historical data 116 may further include other suitable data used in matching requests 118 as described herein, such as times for users to walk and/or travel from the airport terminal 128 (e.g., via a respective gate 131, 132) to a parking lot and/or garage where the location 124 is located. For example, when implementations of the method described below with respect to FIG. 3 and FIG. 4 are implemented with respect to the airport terminal 128 and the parking lot and/or garage where the location 124 is located, such times may be determined and stored at the historical database 110 at the historical data 116. For example, communication devices 106 that previously communicated with the computing device 102, in conjunction with providing respective requests 118 to the computing device 102, may have previously provided their respective locations to the computing device 102, as a function of time, and such respective locations may indicate times for users to walk and/or travel from the airport terminal 128 (e.g., via a respective gate 131, 132) to a parking lot and/or garage where the location 124 is located, amongst other possibilities described herein.

The computing device 102 may adjust the initial time based on the historical data 116 retrieved from one or more of the provider system 104 and the historical database 110, to determine an adjusted time that is different from the initial time. For example the first adjusted time may be determined from data associated with a respective provider object 120 object stored at one or more of the provider system 104 (e.g., the provider object database 114) and the historical database 110.

For example, in some instances, a flight may be early or late, and the adjusted time may include the initial time adjusted by the time period the flight is early or late. Such an early or late time may be recorded at a respective provider object 120 by the provider system 104 and retrieved by the computing device 102, which adjusts the initial time accordingly.

Alternatively, or in addition, the historical data 116 may indicate that the flight may generally be delayed at a given time and/or phase of a year (e.g., winter, for example due to snow), and the historical data 116 indicate an average time period associated with such delays, such as 10 minutes, 15 minutes, 30 minutes, and the like, amongst other possibilities. In these examples, the computing device 102 may extend the initial time by such an average time period; for example, the computing device 102 may determine a current date (e.g., via an associated clock, not depicted), search the historical data 116 for a history of delays at, or around the current date (e.g., a given time period before and after the current date, such as one week, four weeks, six weeks, and the like), and determine the average time period accordingly, though outlier delays may be ignored.

Alternatively, or in addition, data associated with a respective provider object 120 object may indicate that first user 108-1 has checked baggage, and the historical data 116 may indicate an average time period from when the flight arrives (e.g., the initial arrival time) to when checked bags for the flight are picked up. In these examples, the computing device 102 may extend the initial time by such an average time period. Such delays due to checked baggage may be determined from previously reported locations of communication devices 106 to the computing device 102.

Furthermore, the historical data 116 may indicate an average time period for users to travel from the airport terminal 128 to the location 124 (e.g., the distance 126), and/or a parking lot or garage at which the location 124 is located. In these examples, the computing device 102 may extend the initial time by such an average time period. Such time periods may be determined from previously reported locations of communication devices 106 to the computing device 102.

Indeed, the computing device 102 may extend or shorten the initial time to an adjusted time in any suitable manner. In general the adjusted time represents a time the first user 108-1 may arrive at the location 124 of the vehicle 122 to drive to the location 130.

For example, the computing device 102 may determine the adjusted time using tags at a respective request 118. For example, a request 118 may be tagged with: a first tag representing the initial (e.g., expected) arrival time of an associated flight; an optional second tag representing a positive or negative time period by which the flight may be late or early; an optional third tag representing a predicted delay to weather; an optional fourth tag representing a predicted delay to picking up baggage; and a fifth tag representing a time to travel from the airport terminal 128 to the location 124.

Again, the communication devices 106 of the users 108 may periodically provide their respective locations to the computing device 102 as a function of time, so that the computing device 102 may store such data at the historical data 116, and later determine a portion of the aforementioned time periods, including, but not limited to, a time period to pick up checked baggage, a time travel to parking lots and/or garages where vehicles are located, and the like from the historical data 116.

The computing device 102 may determine a similar adjusted time for other requests 118 based on respective flights and provider objects 120. However, respective tags representing a time to travel from the airport terminal 128 (e.g., via a respective gate 131, 132) to the location 124 may not be determined until the computing device 102 compares the request 118 received from the first communication device 106-1 with other requests 118. For example, the computing device 102 generally attempts to match a first request 118 associated with driving the vehicle 122 to the location 130 from the airport terminal 128, with a second request 118 associated with traveling to the location 130 from the airport terminal 128 without a vehicle. The matching may be based on matching associated locations of the requests 118 as well as matching times at which users 108 associated with the requests 118 may arrive at the location 124 of the vehicle 122; such matching of times may occur when respective adjusted times of two requests 118 are within a given time period of each other, such as 5 minutes, 10 minutes, 15 minutes, amongst other possibilities.

When a match between requests 118 occurs, the computing device 102 may provide to respective communication devices 106 associated with the matched requests 118, respective notifications of the match, and which may include the location 124 of the vehicle 122, an identifier of the matched location 130, names of the associated users 108, and the like, amongst other possibilities.

In some instances, prior to the adjusted times, matched requests 118 may no longer match, for example due to weather, flight delays, and the like. For example the computing device 102 may receive, from the provider system 104, a notification that an initial time, associated with the aforementioned request 118 from the first communication device 106-1 (e.g., from the first user 108-1 who operates the vehicle 122), has changed to a different first initial time. Alternatively, or in addition, the computing device 102 may receive, from the provider system 104, a notification that an initial time, associated with the aforementioned request 118 associated with the second communication device 106-1, has changed to a different first initial time. Hence, while the associated users 108-1, 108-2 may still be arriving at the airport terminal 128 on respective flights, one or more respective flights may be delayed such that respective adjusted times associated with the previously matched requests 118 no longer match (e.g., are no longer within the aforementioned give time period).

Using the aforementioned request 118 from the first communication device 106-1 (e.g., from the first user 108-1 who operates the vehicle 122) as an example, the computing device 102, may update the associated adjusted time to an associated updated adjusted time based, for example, on based on the associated different initial time (e.g., a delayed arrival time of a flight), and the updated adjusted time may represent a time at which the first user 108-1 is predicted to arrive at the vehicle 122, taking into account associated flight delays, and the like. Based on the updated adjusted time, the respective requests may no longer match.

As such, the computing device 102 may cancel the match, and attempt to again match the respective requests 118 with other requests.

In some examples, cancelling of the match may occur automatically as the users 108 associated with the previously matched requests may be on respective flights and may not be able to receive messages on their respective communication devices 106. Hence, in these examples, while the users 108 may have previously received notifications of the match via their respective communication devices 106, when one flight is late, the computing device 102 may attempt to automatically find other matches between requests 118 so that, by the time the users 108 land, their rides may be rescheduled without the users 108 interacting with their respective communication devices 106. The computing device 102 nonetheless provides notifications of the cancelling to the respective communication devices 106 associated with the previously matched requests.

In other examples, to cancel the match, the computing device 102 may provide to the respective communication devices 106, associated with the previously matched requests 118, respective updated notifications that the previously matched requests 118 no longer match, the respective updated notifications including the updated adjusted time, for example to provide an indication of a reason why the previously matched requests 118 no longer match. In these examples, the computing device 102 may receive, from one or more of the respective communication devices 106 with the previously matched requests 118 a cancel request to cancel the match between the previously matched requests 118. In this example, the users 108 associated with the previously matched requests 118 are given the option of cancelling the match or not. For example, the updated adjusted time may only be a few minutes outside of a given time period used to determine the match, and one or more of the users 108 may find such a delay acceptable and not cancel the match, or one or more of the users 108 may find such a delay unacceptable and cancel the match via the aforementioned cancel request.

Presuming the match is cancelled, the computing device 102 may access the request matching database 112 to match a request 118, of the previously matched requests 118, with a third request 118 based on the updated adjusted time and the first location identifier. Using the request 118 from the first communication device 106-1 as an example, and presuming the flight of the first user 108-1 is late by an hour, such that the updated adjusted time associated with the request 118 from the first communication device 106-1 is an hour later than an initial adjusted time (e.g., the first user 108-1 is predicted to arrive at the location 124 of the vehicle 122 an hour later than first predicted), the computing device 102 attempts to match the request 118 from the first communication device 106-1 with another request 118 similar to as described above.

When a new match occurs, the computing device 102 provides, to the respective communication devices 106 associated with the requests 118 of the new match, respective notifications of the new match.

When no new match occurs, the computing device 102 may provide, to the first communication device 106-1, an indication that no new match could be found.

A similar process may occur for the request 118 from the second communication device 106-2.

It is further understood that while only one request matching database 112 is depicted, the system 100 may comprise a plurality of request matching databases, associated with different entities that are generally associated with request matching and/or providing certain vehicular transportation services, and which may provide payment infrastructure, and the like, for such services. For example, different users 108 may be registered with different entities that are generally associated with request matching and/or providing certain vehicular transportation services, and hence the users 108 may have a preference as to which of the different entities is used to provide payment, and the like, for any services associated with request matching. As such, requests 118 from the communication devices 106 may indicate which request matching database to use when matching requests 118, and the computing device 102 may hence limit request matching to requests 118 stored at an identified request matching database.

It is furthermore understood that the computing device 102 may act as an intermediary between the communication devices 106 and servers, and the like, of an entity that maintains the request matching database 112. As such, as depicted, the requests 118 may be tagged with an identifier 136 (e.g., as depicted "102") of the computing device 102 (e.g., and/or an associated entity) which indicates that the computing device 102 has been authorized to access the requests 118 at the request matching database 112.

Alternatively, or in addition, different requests 118 may be tagged with different identifiers, including the identifier 136, that identify different computing devices the identifier 136; indeed, in some examples, some requests 118 may not be tagged. In these examples, the computing device 102 may have access to the different requests 118 regardless of whether or not they are tagged with the identifier 136. In these examples, the computing device 102 may prioritize matching requests 118 that are tagged with the identifier 136 of the computing device 102 and, when no match is found, the computing device 102 may match a request 118 tagged with the identifier 136 with a request 118 that is not tagged, or tagged with another identifier. Requests 118 not tagged with the identifier 136 may be generated from communication devices 106 that may offer a ride or request a ride from other sources, such as computing devices dedicated to ride sharing that may have a relationship with the entity operating the request matching database 112, but not the entity associated with the computing device 102.

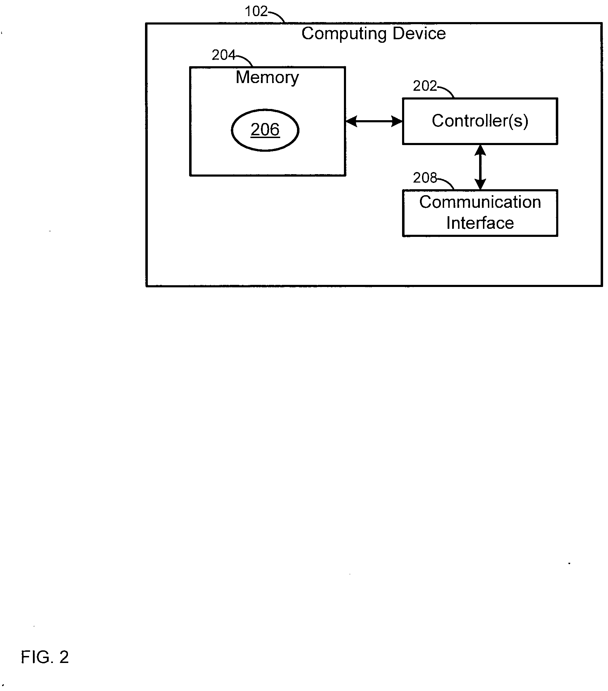

Turning to FIG. 2, before discussing the functionality of the system 100 in greater detail, certain components of the computing device 102 will be described. While depicted as one device, the computing device 102 may comprise one or more computing devices and/or one or more cloud computing devices that may be geographically distributed.

As shown in FIG. 2, the computing device 102 includes at least one controller 202, such as a central processing unit (CPU) or the like. The controller 202 is interconnected with a memory 204 storing an application 206, the memory 204 implemented as a suitable non-transitory computer-readable medium (e.g., a suitable combination of non-volatile and volatile memory subsystems including any one or more of Random Access Memory (RAM), read only memory (ROM), Electrically Erasable Programmable Read Only Memory (EEPROM), flash memory, magnetic computer storage, and the like). The controller 202 and the memory 204 are generally comprised of one or more integrated circuits (ICs).

The controller 202 is also interconnected with a communication interface 208, which enables the computing device 102 to communicate with the other components of the system 100, though it is understood such communication may occur locally when components of the system 100 are combined. The communication interface 208 therefore may include any necessary components (e.g., network interface controllers (NICs), radio units, and the like) to communicate with components of the system 100. The specific components of the communication interface 208 may be selected based on upon a nature of one or more networks that the components of the system 100 use to communicate, and/or local communication between components of the system 100, and the like. The computing device 102 may also include input and output devices connected to the controller 202, such as keyboards, pointing devices, display screens, and the like.

The components of the computing device 102 mentioned above may be deployed in a single enclosure, or in a distributed format. In some examples, therefore, the computing device 102 includes a plurality of processors, either sharing the memory 204 and communication interface 208, or each having distinct associated memories and communication interfaces. As such, it is understood that the memory 204, and/or a portion of the memory 204, may be internal (e.g., as depicted) or external to the computing device 102; regardless, the controller 202 is understood to have access to the memory 204. Furthermore, the memory 204 may at least partially comprise one or more of the databases 110, 112, and/or store at least a portion of the historical data 116 and/or the requests 118.

Furthermore the application 206 may comprise computer-readable programming instructions, executable by the controller 202.

As will be understood by those skilled in the art, the controller 202 executes the instructions of the application 206 in order to perform a set of operations defined by the instructions contained therein including, but not limited to, the blocks of a method described with respect to FIG. 3 and FIG. 4. In the description below, the controller 202, and more generally the computing device 102, are understood to be configured to perform those actions. It will be understood that they are so configured via the execution (by the controller 202) of the instructions of the application stored in the memory 204. Put another way, the computing device 102 may comprise a computer-readable storage medium (e.g., a non-transitory computer-readable storage medium, such as the memory 204) having stored thereon program instructions that, when executed by the controller 202, causes the controller 202 to perform a set of operations comprising the blocks of the method described with respect to FIG. 3 and FIG. 4.

In some examples, the application 206 may comprise one or more programmatic algorithms.

Alternatively, or in addition, the application 206 may comprise one or more machine learning algorithms trained to implement at least a portion of the functionality described herein, and which may include, but are not limited to: a deep-learning based algorithm; a neural network; a generalized linear regression algorithm; a random forest algorithm; a support vector machine algorithm; a gradient boosting regression algorithm; a decision tree algorithm; a generalized additive model; evolutionary programming algorithms; Bayesian inference algorithms, reinforcement learning algorithms, and the like. However, any suitable machine learning algorithm and/or deep learning algorithm and/or neural network is within the scope of present examples.

When such modules and/or components include machine learning algorithms, it is understood that the machine learning algorithms may be operated in a training mode to train the machine learning algorithms to perform functionality as described herein. In particular, the machine learning algorithms may be operated according to a machine learning training feedback loop in which previous input and previous output are used as training data labelled with a score, and the like, indicating accuracy and/or adequacy, and the like of the previous output.

For example, one or more machine learning algorithms may be used to determine delay times used to determine adjusted times as described herein. Furthermore, actual delay times that are determined during implementation of the method of FIG. 3 and FIG. 4 may be used to train the one or more machine learning algorithms to better predict the delay times in a machine learning feedback loop.

While structure of the provider system 104 is not described in detail, the provider system 104 may be understood to have a similar structure as the computing device 102, but adapted for respective functionality of the provider system 104. Furthermore, the database 114 may be internal and/or external to the provider system 104.

Attention is now directed to FIG. 3 and FIG. 4, which depict a flowchart representative of a method 300 a method for request matching to reduce vehicle traffic. The operations of the method 300 correspond to machine readable instructions that are executed by the computing device 102, and specifically the controller 202 of the computing device 102. In the illustrated example, the instructions represented by the blocks of the method 300 are stored at the memory 204 for example, as the application 206. The method 300 is one way in which the system 100 and/or the computing device 102 may be configured. Furthermore, the following discussion of the method 300 will lead to a further understanding of the system 100, and its various components.

The method 300 need not be performed in the exact sequence as shown and likewise various blocks may be performed in parallel rather than in sequence. Accordingly, the elements of a method 300 are referred to herein as "blocks" rather than "steps." The method 300 may be implemented on variations of the system 100 of, as well.

With attention first directed to FIG. 3, at a block 302, the controller 202, and/or the computing device 102, receives (e.g., via the communication interface 208) a first request 118 that includes a first provider object identifier of a first provider object 120, and a first location identifier.

The first provider object 120 may represent a flight arriving at the airport terminal 128, and the first location identifier may identify a location, such as the location 130, to which an associated user 108 is driving, after arriving at the airport terminal 128, using a vehicle, such as the vehicle 122.

It is understood that other requests 118 may have been previously received and stored at the request matching database 112.

Furthermore, when the first request 118 is received from the first communication device 106-1 operated by the user 108-1 associated with the vehicle 122, the first request 118 may identify the location 124 of the vehicle 122. Furthermore, in this example, the first request 118 may offer a ride to the location 130 via the vehicle 122.

However, when the first request 118 is received from the second communication device 106-2 operated by the user 108-2, not associated with a vehicle, the first request 118 may request a ride to the location 130,

At a block 304, the controller 202, and/or the computing device 102, retrieves, from one or more of a provider system 104 and a historical database 110, using the first provider object identifier, a first initial time associated with the first provider object 120.

Presuming the first provider object 120 represents a flight arriving at the airport terminal 128, the first initial time may, for example, represent arrival time of the flight at the airport terminal 128.

At a block 306, the controller 202, and/or the computing device 102, adjusts the first initial time based on historical data 116 retrieved from one or more of the provider system 104 and the historical database 110, to determine a first adjusted time that is different from the first initial time, the first adjusted time determined from data associated with the first provider object 120 stored at one or more of the provider system 104 and the historical database 110.

Such data may include the historical data 116 stored at the historical database 110 and/or the provider object database 114, as has been previously described.

In particular, adjusting the first initial time based on the historical data 116 retrieved from one or more of the provider system 104 and the historical database 110, to determine the first adjusted time may comprise adding one or more time periods to the first initial time. Such one or more time periods may comprise one or more of: a first time period determined from historical changes to the first initial time (e.g., for flights being early or late); a second time period associated with a phase in which the first initial time is located (e.g., a phase being a time period of a year, such a winter, spring, summer or fall, and/or a time period around the date of the flight); and a third time period associated with a displacement between an initial location associated with the first initial time and a first location associated with the first location identifier (e.g., a time period for travelling from a gate 131, 132 of the airport terminal 128 to the location 124 of the vehicle 122). However, such one or more time periods may include, but are not limited to, time periods for picking up checked baggage, and the like.

Furthermore such time periods and/or delay times may be determined using one or more machine learning algorithms trained to determine such time periods and/or delay times using, for example, previously stored historical changes to first initial times (e.g., for certain flights and/or certain phases of a year), previously determined respective time periods to travel from the gates 131, 132 to the location 124, previously determined time periods for picking up checked baggage, and the like. Such one or more machine learning algorithms may receive, as input, suitable information from the first provider object 120 (e.g., flight number, gate number date/time, checked baggage information) and output the time periods and/or delay times.

At a block 308, the controller 202, and/or the computing device 102, accesses at least one request matching database 112 to match the first request 118 with a second request 118 based on the first adjusted time and the first location identifier, the second request 118 associated with: a second initial time or a second adjusted time; and a second location identifier.

Put another way, at the block 308, the controller 202, and/or the computing device 102 attempts to match the first request 118 with another request 118, as has been previously described.

In these examples, the method 300 may further comprise, the controller 202, and/or the computing device 102,: receiving the second request 118 that includes a second provider object identifier of a second provider object 120, and the second location identifier; retrieving, from one or more of a respective provider system 104 and the historical database 110, using the second provider object identifier, the second initial time associated with the second provider object 120; and adjusting the second initial time based on respective historical data 116 retrieved from one or more of the respective provider system 104 and the historical database 110, to determine the second adjusted time that is different from the second initial time, and wherein the match between the first request 118 and the second request 118 is based on the second adjusted time. Such determining of the second adjusted time may occur in a similar manner described with respect to determining the first adjusted time. It is understood that the respective provider system 104 that provides the second provider object may be the same or different as the provider system 104 of FIG. 1, and the requests 118 of the system 100 may be associated with different provider systems 104 such that the users 108 are not restricted to using a same airline for the method 300 to operate.

In a particular example, as previously described, the airport terminal 128 may have two gates 131, 132, and flights of users 108 may be arriving at different gates 131, 132. Hence, for example, the first adjusted time associated with the first request 118 of the block 302 may be based on the distance 126 from the first gate 131 to the location 124, but the second adjusted time associated with the second request 118 of the block 308 may be based on the distance 133 from the second gate 132 to the location 124.

Alternatively, or in addition, an airport, at which the airport terminal 128 is located, may have two or more terminals (including, but not limited to, the airport terminal 128), and flights of users 108 may be arriving at different airport terminals, and the method 300 may be adapted accordingly. Hence, for example, the first adjusted time associated with the first request 118 of the block 302 may be based on the distance 126 from the first gate 131, at a first airport terminal (e.g., the airport terminal 128), to the location 124, and the second adjusted time associated with the second request 118 of the block 308 may be based on a distance from a second gate, at another at a second airport terminal, to the location 124.

In some examples, at the block 308, a match may occur when: two requests 118 are associated with a same location (e.g., the location 130) to which associated users 108 are travelling to after arriving at the airport terminal 128: one request 118 is associated with a vehicle (e.g., the vehicle 122) while the other request 118 is associated with a request for a ride to the same location; and the aforementioned adjusted times are within a given time period.

However, in other examples a match may occur when: two requests 118 are associated with a same location (e.g., the location 130) to which associated users 108 are travelling to after arriving at the airport terminal 128: one request 118 is associated with a vehicle (e.g., the vehicle 122) while the other request 118 is associated with a request for a ride to the same location; and one adjusted time (e.g., at which a first user 108 arrives at the location 124 of the vehicle 122) is within another given time period of one initial time (e.g., at which a second user 108 arrives at the airport terminal 128). In this example, the other given time period may be dynamic and based on an estimate of when the second user 108 may arrive at the arrive at the location 124 of the vehicle 122.

At a block 310, the controller 202, and/or the computing device 102, provides (e.g., via the communication interface 208), to respective communication devices 106 associated with the first request 118 and the second request 118, respective notifications of the match between the first request 118 and the second request 118.

Such notifications may include an identifier of the location 124 of the vehicle 122, and the first adjusted time (e.g., that at least one of the users 108 may arrive at the location 124 of the vehicle 122), amongst other possibilities, including, but not limited to, names of the users 108, an identifier of the location 130, and the like.

At a block 312, the controller 202, and/or the computing device 102, receives, from the provider system 104, a notification that the first initial time has changed to a different first initial time.

For example, a flight associated with the first request 118 may be delayed, and the different first initial time may comprise the delayed arrival time of the flight.

At a block 314, the controller 202, and/or the computing device 102, updates, based on the different first initial time, the first adjusted time to a first updated adjusted time.

The first updated adjusted time may be the new time that the associated user 108 is estimated to arrive at the location 124 of the vehicle 122 due to the flight delay.

At a block 316, the controller 202, and/or the computing device 102, determines whether the first request 118 and the second request 118 continue to match or no longer match based, for example, on the first updated adjusted time.

When the first request 118 and the second request 118 continue to match (e.g., a "NO" decision at the block 316), at a block 318 the method 300 ends.

Put another way, the first request 118 and the second request 118 may continue to match regardless of a flight being delayed.

However, when the first request 118 and the second request 118 no longer match (e.g., a "YES" decision at the block 316), and with attention next directed to FIG. 4, at a block 320, the controller 202, and/or the computing device 102, cancels the match between the first request 118 and the second request 118.

Cancelling may occur without further messaging to the associated communication devices 106, other than to notify the associated communication devices 106 of the cancelling, or cancelling may occur by notifying the associated communication devices 106 and receiving, in response, a cancel request, as has been previously described.

At a block 322, which also occurs in response to the first request 118 and the second request 118 no longer matching, the controller 202, and/or the computing device 102, accesses, the at least one request matching database 112 to match the first request 118 with a third request 118 based on the first updated adjusted time and the first location identifier.

Put another way, the controller 202, and/or the computing device 102 attempts to match the first request 118 with another request, similar to as described with respect to the block 308.

At a block 324, the controller 202, and/or the computing device 102, provides (e.g., via the communication interface 208), to the respective communication devices 106 associated with the first request 118 and the third request 118, respective notifications of the match between the first request 118 and the third request 118. The block 324 is otherwise similar to the block 310.

In general the method 300 causes, via the described request matching, two users 108 to use one vehicle to travel to a same location once arriving at a destination; otherwise, while one user 108 may use their vehicle to travel to the location, the other user 108 would take a taxi or limousine to the location. Hence, the method 300 may generally enable use of one vehicle, rather than two, for two users 108 to travel to a same location once arriving at a destination thereby reducing a carbon footprint and/or pollution of the two users 108 to half of what their carbon footprint and/or pollution would otherwise be for such travel.

Furthermore, when flights are delayed, and a match cancelled, another match may occur, which again may reduce the aforementioned carbon footprint and/or pollution.

Indeed, the method 300 may be adapted such that matching may occur for more than two requests 118. For example, a request 118 offering a ride from the airport terminal 128 to the location 130 via the vehicle 122 may indicate a number of users 108 that the vehicle 122 may transport, and hence, the aforementioned matching may occur for up to such a number. Put another way, when the vehicle 122 may transport four users 108, the request matching may occur for up to four requests 118. Limits may also be placed on baggage of the users 108: for example the requests 118 may indicate a number of associated bags being carried by a user 108, or a maximum number of bags of an offered vehicle, and the computing device 102 may limit the number of matched requests 118 such that a total number of bags does not exceed the maximum number of bags.

The method 300 may include other features.

For example, while the method 300 has been described with respect to matching the first request 118 to a third request 118, the controller 202, and/or the computing device 102 may also generally attempt to match the second request 118 with a fourth request 118.

In particular, the method 300 may further comprise, the controller 202, and/or the computing device 102: in response to determining that the first request 118 and the second request 118 no longer match (e.g., a "YES" decision at the block 316): accessing the at least one request matching database 112 to match the second request 118 with a fourth request 118 based on the second adjusted time, or the second initial time, and the second location identifier; and providing to the respective communication devices 106 associated with the second request 118 and the fourth request 118, respective notifications of the match between the second request 118 and the fourth request 118. It is understood that one of the second request 118 and the fourth request 118 may comprise an offer of a ride to the location 130 via a vehicle, while the other of the second request 118 and the fourth request 118 may comprise request for a ride to the location 130.

In further examples, cancelling the match between the first request 118 and the second request 118 (e.g., at the block 320) may comprise: providing to the respective communication devices 106 associated with the first request 118 and the second request 118, respective updated notifications that the first request 118 and the second request 118 no longer match, the respective updated notifications including the first updated adjusted time; receiving from one or more of the respective communication devices 106 associated with the first request 118 and the second request 118, a cancel request 118 to cancel the match between the first request 118 and the second request 118; and cancelling the request 118 in response to receiving the cancel request 118.

In some of these examples, the method 300 may further comprise, the controller 202, and/or the computing device 102, in response to providing to the respective communication devices 106 associated with the first request 118 and the second request 118, the respective updated notifications that the first request 118 and the second request 118 no longer match: receiving a maintain request from one or both of the respective communication devices 106 associated with the first request 118 and the second request 118; and maintaining the match between the first request 118 and the second request 118.

Hence, in these examples, when the respective communication devices 106 associated with the first request 118 and the second request 118 receive the respective updated notifications that the first request 118 and the second request 118 no longer match, one or more of the respective communication devices 106 may be operated to generate the maintain request which may obviate the cancelling, unless a cancel request is received from the other of the respective communication devices 106.

Furthermore, in other examples, the respective notifications of the match between the first request 118 and the second request 118 may be associated with a blackout communication time period, for example based on the first provider object 120 associated with the first request 118 of the block 302. In particular, the first provider object 120 associated with the first request 118 may indicate a blackout communication time period during which the associated user 108 may not be reachable (e.g., due to being on a flight, and the like). It is understood that if the user 108 associated with the second request 118 attempts to proactively cancel the match of the block 308 via operating their respective communication device 106, when such a cancellation occurs during the blackout communication time period, no cancellation fee may be incurred, but when such a cancellation occurs outside the blackout communication time period, a cancellation fee may be incurred. Such examples assume that fees may be collected in exchange for providing rides.

In some examples, matching between requests 118 may be based on associations of requests 118 with certain entities, and the like.

For example, the first request 118 may identifies a given request matching database 112, and accessing the at least one request matching database 112 to match the first request 118 with the second request 118 (e.g., at the block 308) may comprise: accessing the given request matching database 112 identified in the first request 118. Hence, for example, the first request 118 may identify a particular entity with which a user 108 associated with the first request 118 has a relationship and in particular an account, and the first request 118 specifically identify the particular entity so that the first request 118 is matched only with other requests 118 associated with the same particular entity.

Indeed, in these examples, the requests 118 may be generated via an application associated with the particular entity installed at the communication devices 106, and the various notifications and/or messages described herein with respect to the method 300 may occur via such an application associated with the particular entity. Hence, certain requests 118 may be specific to such an application associated with the particular entity, and hence in some examples, matching may occur only between requests 118 generated via such an application associated with the particular entity.

Indeed, such an application may be for transportation network companies that enables users 108 to hire vehicles for rides and/or travel-agent entities that enables users 108 to book travel. In such an example, an application may be adapted to include an electronic button which, when actuated, causes requests 118 as described herein to be generated and provided to the computing device 102, which may be operated by an entity different from an entity associated with the application.

As such, in some examples, the method 300 may further comprise, the controller 202, and/or the computing device 102 one or more of: tagging the first request 118 and the second request 118, stored at the at least one request matching database 112, with an identifier 136 of the computing device 102, to enable access of the computing device 102 to the first request 118 and the second request 118, stored at the at least one request matching database 112; and cause prioritization of matching between the first request 118 and the second request 118 over other requests 118 not tagged with the identifier of the computing device 102.

Put another way, a request matching database 112 may be operated by an entity other than the entity associated with the computing device 102, and hence tagging the requests 118, as stored at the request matching database 112, with an identifier 136 of the computing device 102 (e.g., a network address, an alphanumeric identifier, and the like) may provide authorization for the computing device 102 to access the requests 118 (e.g., but not requests 118 that do not include such an identifier 136).

Alternatively, different requests 118 may be tagged with different identifiers, including the identifier 136, that identify different computing devices the identifier 136; indeed, in some examples, some requests 118 may not be tagged. In these examples, the computing device 102 may have access to the different requests 118 regardless of whether or not they are tagged with the identifier 136. In these examples, the computing device 102 may prioritize matching requests 118 that are tagged with the identifier 136 of the computing device 102 and, when no match is found, the computing device 102 may match a request 118 tagged with the identifier 136 with a request 118 that is not tagged, or tagged with another identifier. Requests 118 not tagged with the identifier 136 may be generated from communication devices 106 that may offer a ride or request a ride from other sources, such as computing devices dedicated to ride sharing that may have a relationship with the entity operating the request matching database 112, but not the entity associated with the computing device 102

The method 300 may further comprise the controller 202, and/or the computing device 102: updating the historical data 116 based on the adjusted times as described herein.

For example, the historical data 116 may comprise any suitable data that enables and/or assists with the method 300. Once adjusted times as described herein are determined, such adjusted times may be stored as historical data 116 to assist with a later implementation of the method 300. Indeed, method 300 may further comprise the controller 202, and/or the computing device 102: updating the historical data 116 based on one or more of: adjusted time, times for picking up baggage, times to travel to a location of a vehicle, and the like.

In this manner, an updating process forms a feedback loop with the remainder of the method 300 so that when the method 300 is later implemented the historical data 116 from previous implementations of the method 300 may be used to improve efficiency of the computing device 102 when later determining adjusted times as described herein. Alternatively, or in addition, when the method 300 is implemented via one or more machine learning algorithms, the feedback loop may comprise a machine learning feedback loop to better train the one or more machine learning algorithms to predict adjusted times and/or associated delay time periods.

Indeed, while alleviating pollution may be an underlying technical problem that is addressed by the technical solution provided by the present specification, another underlying technical problem addressed by the technical solution provided by the present specification may be improving the efficiency of the computing device 102 in request matching, which is addressed by updating the historical data 116 and/or providing the aforementioned feedback loop.

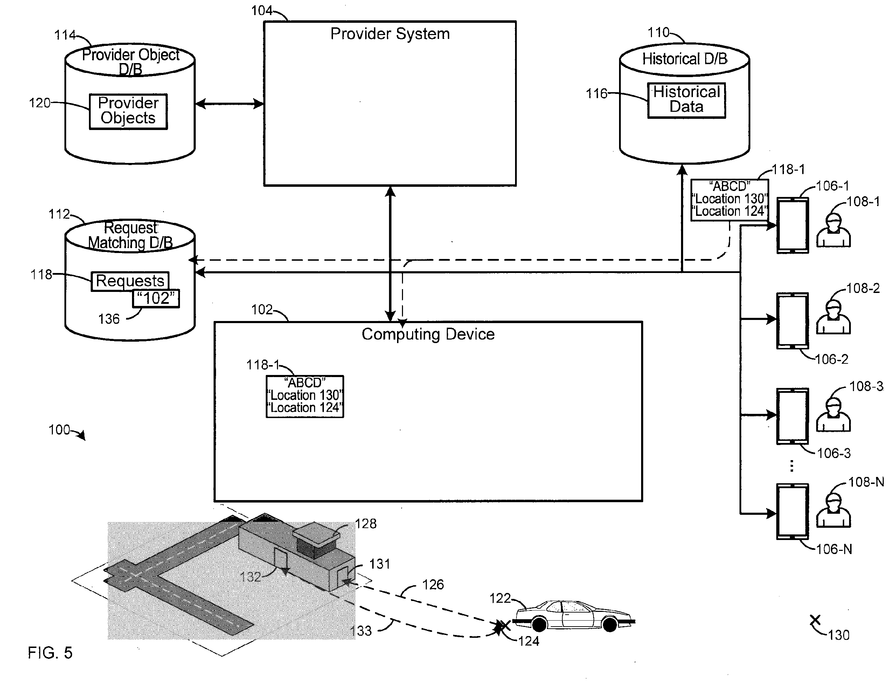

An example of the method 300 is described with respect to FIG. 5, FIG. 6, FIG. 7, FIG. 8, FIG. 9, FIG. 10, FIG. 11, FIG. 12, and FIG. 13, which are substantially similar to FIG. 1, with like components having like numbers.

Attention is first directed to FIG. 5, which depicts the computing device 102 receiving (e.g., at the block 302 of the method 300) a first request 118-1 from the first communication device 106-1, that includes a first provider object identifier (e.g., a reservation number "ABCD") of a first provider object 120, and a first location identifier (e.g., "Location 130") of a destination location, such as the location 130, as well as an identifier of the location 124 at which the vehicle 122 is parked. While not depicted, the first request 118-1 may further indicate that a ride from the airport terminal 128 to the location 130 via a vehicle is being offered.

As depicted, the first request 118 may be furthermore provided to the request matching database 112 for storage. For example, in the event that no matches are found for the first request 118-1 amongst the requests 118, the first request 118 may be stored and compared to requests 118 that are later received.

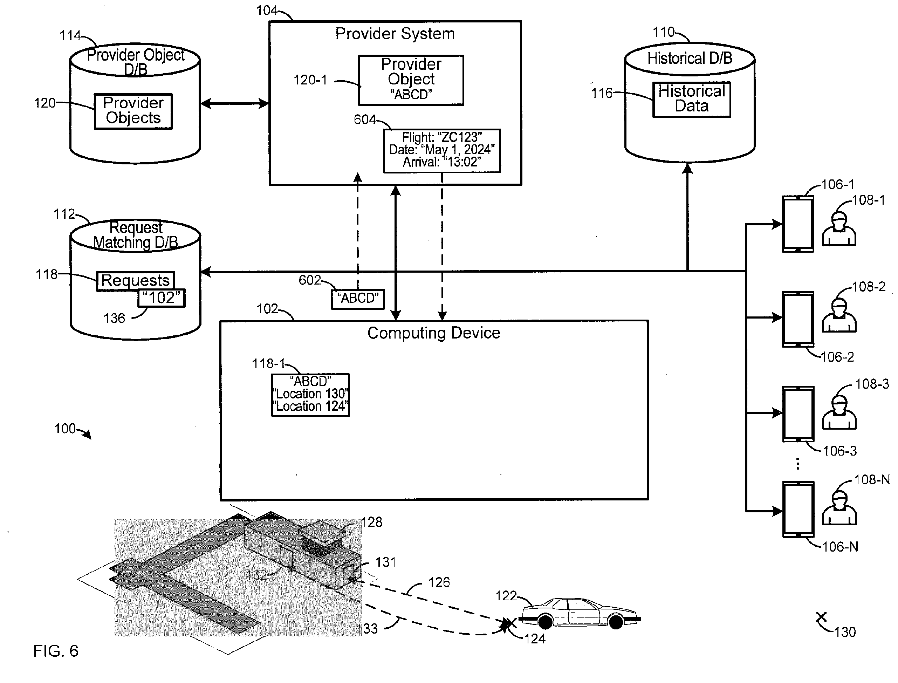

Attention is next directed to FIG. 6, which depicts the computing device 102 retrieving (e.g., at the block 304 of the method 300) from the provider system 104, using the first provider object identifier (e.g., "ABCD"), a first initial time associated with a first provider object 120-1. For example, as depicted, the computing device 102 provides a query 602 to the provider system 104 that includes the first provider object identifier (e.g., "ABCD") from the first request 118-1, and the provider system 104 is understood to search the provider objects 120 stored at the provider object database 114 for a provider object 120-1 that includes the first provider object identifier (e.g., "ABCD"); the provider system 104 then returns information 604 associated with the identified provider object 120-1 to the computing device 102. Such information 604 includes an associated flight number "ZC123", an associated date (e.g., "May 1, 2024"), and an associated scheduled arrival time (e.g., "13:02"). While not depicted, when the identified provider object 120-1 is associated with checked baggage, the information 604 may include an indicator of such checked baggage.

In some examples, the provider system 104 may extract the information 604 from the first provider object 120-1, whereas in other examples the information 604 may be provided to the computing device 102 in the form of the first provider object 120-1. Regardless, the computing device 102 then has access to the first initial time in the form of the scheduled arrival time.

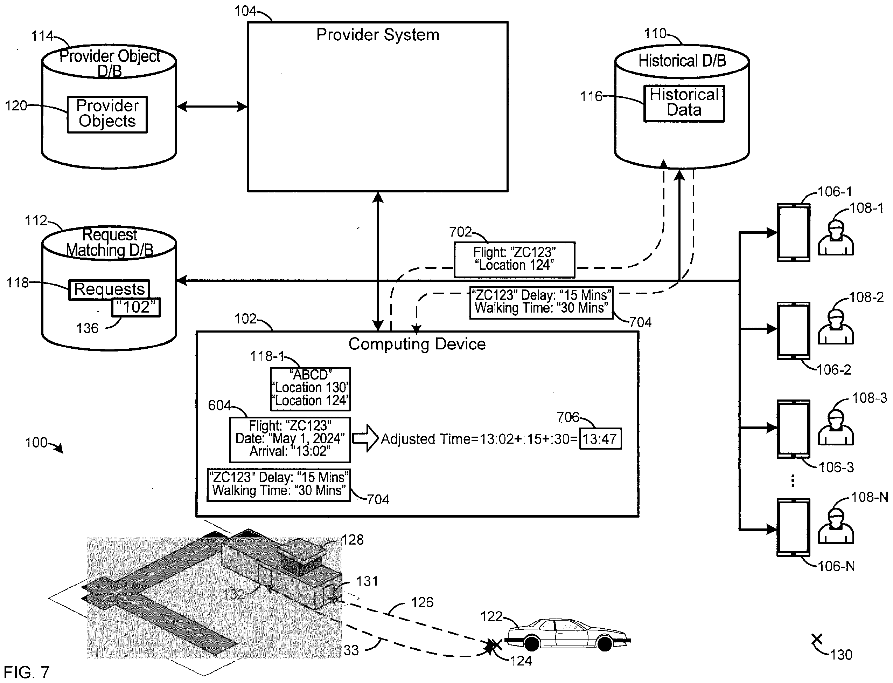

Attention is next directed to FIG. 7, which depicts the computing device 102 querying the historical database 110 via a query 702 that includes the flight number "ZC123" from the information 604 and an identifier "Location 124" of the location 124. The information from the query 702 is used to search the historical data 116 for historical delay times of the flight "ZC123", as well as historical walking times from the airport terminal 128 to the location 124. The query 702 may include any other suitable information to enable such a search and/or database lookup.

As depicted, the computing device 102 receives, in response to the query 702, data 704 that includes an historical delay time of the flight "ZC123" of "15 Mins" (e.g., fifteen minutes), that may be for a particular phase of the year in which the arrival time on May 1, 2024 is located (e.g., spring, and/or the month of May, and/or two weeks before and after May 1, and the like). The data 704 further includes an historical walking time from the airport terminal 128 to the location 124 of "30 Mins" (e.g., thirty minutes), which may be from the gate 131 (e.g., while not depicted, the historical data 116 from which the data 704 is extracted, may indicate that flight "ZC123" historically arrives at the gate 131). The data 704 is understood to comprise a subset of the historical data 116.

Furthermore, one or more of the information 604 and the data 704 may include an indicator of the gate 131, 132 at which the flight "ZC123" may arrive. In the following example it is assumed that the flight "ZC123" arrives at the gate 131.

As also depicted in FIG. 7, the computing device determines a first adjusted time 706 that is different from the first initial time of "13:02" by adding the historical delay time of the flight "ZC123" of "15 Mins" and the historical walking time from the airport terminal 128 (e.g., from the gate 131) to the location 124 of "30 Mins" to the first initial time, to determine the first adjusted time 706 of "13:47", which is an estimate of when the first user 108-1 may arrive at the location 124 of the vehicle 122.

It is further understood that the request 118-1, when stored at the request matching database 112, may be updated, via the computing device 102, to include the information 604 and the first adjusted time 706. Indeed, any and/or all of the requests 118 stored at the request matching database 112 may be updated with similar associated information, which may include, or not include, the first adjusted time 706.

It is furthermore understood that when the method 300 is being implemented using one or more machine learning algorithms, the information from the query 702 may be entered into the one or more machine learning algorithms which returns the data 704 (e.g., based on historical data 116 previously used to train the one or more machine learning algorithms).

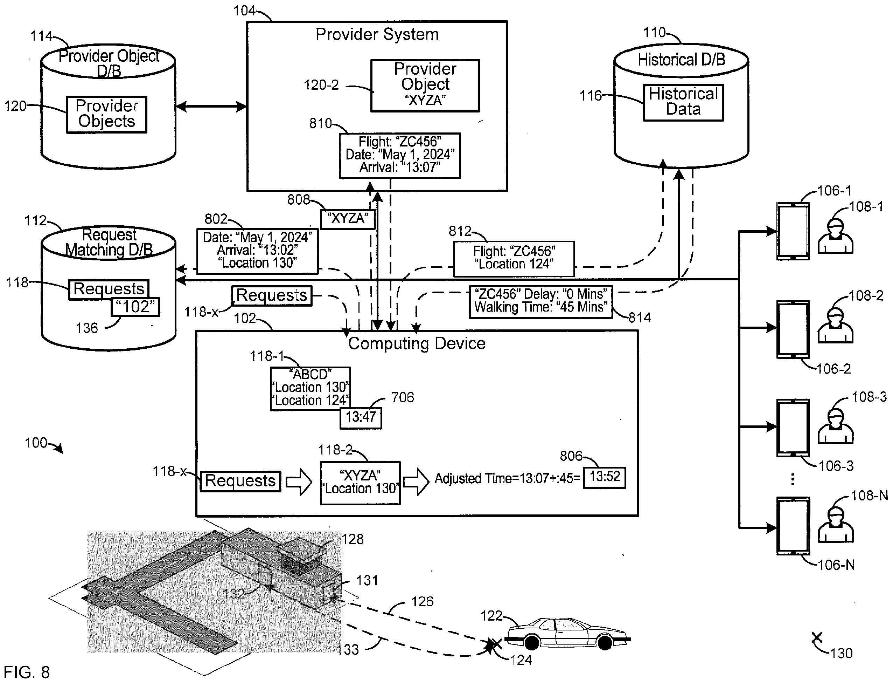

Attention is next directed to FIG. 8, which depicts the computing device 102 accessing (e.g., at the block 308 of the method 300) the request matching database 112 to match the first request 108-1 with a second request 118 based on the first adjusted time 706 and the first location identifier of "Location 130".

For example, the computing device 102 may provide a query 802 to the request matching database 112 that includes the date of "May 1, 2024" and a scheduled arrival time of "13:02" associated with the first provider object 120-1, as well as the identifier "Location 130" of the location 130, to search for requests 118 that match, or about match these parameters. For example, the computing device 102 may receive, from the request matching database 112, a subset of the requests 118-x, that include an identifier of the location 130, and a date of "May 1, 2024", and are associated with respective initial times that are within a given time period of the scheduled arrival time associated with the first provider object 120-1 (e.g., plus or minus 5 minutes, 10 minutes, 15 minutes, amongst other possibilities). The subset of the requests 118-x are further understood to include an indication that a ride to the location 130 from the airport terminal 128 is being requested.

While the subset of the requests 118-x are understood to be associated with respective initial times, such as respective scheduled arrival times, in other examples, the subset of the requests 118-x may be associated with one or more respective adjusted times, for example times to travel from the airport terminal 128 (e.g., via a respective gate 131, 132) to a parking lot and/or garage associated with the airport terminal 128, which may include a parking lot and/or garage where the location 124 is located. Hence, in these examples, the query 802 may alternatively include the first adjusted time 706, and the subset of the requests 118-x returned to the computing device 102 maybe associated with respective adjusted times that are within a given time period of the first adjusted time 706, (e.g., plus or minus 5 minutes, 10 minutes, 15 minutes, amongst other possibilities).

Put another way, requests 118-x of the subset are understood to be associated with: a respective second initial times or respective second adjusted times; and a second location identifier (e.g., such as the location identifier "Location 130" of the location 130, or a location identifier that identifies a location between the location 124 and the location 130).

Assuming the subset of the requests 118-x does not include adjusted times, as depicted, the computing device 102 processes the subset of the requests 118-x to determine respective adjusted times thereof, and selects a second request 118-2 associated with an adjusted time 806 within a given time period of the adjusted time 706 associated with the first request 118-1.

FIG. 8 further depicts an example of the adjusted time 806 being determined, which is similar to the process for determining the adjusted time 706 depicted in FIG. 7, though one or more machine learning algorithms may be used to determine the adjusted time 806.

For example, as depicted, the computing device 102 extracts, from the second request 118-2, a flight identifier of "XYZA". As is also seen in FIG. 8, the second request 118-2 includes an identifier "Location 130" of the location 130.

The computing device 102 provides a query 808 to the provider system 104 (or another provider system 104) that includes the flight identifier of "XYZA". The provider system 104 uses the flight identifier of "XYZA" to search the provider objects 120 for a second provider object 120-2 that includes the flight identifier of "XYZA", as well as a flight number of "ZC456", a date of "May 1, 2024" and a time of "13:07" that the associated flight arrives at the airport terminal 128. Such information 810 is returned to the computing device 102, which provides a query 812 to the historical database 110 that includes the flight number of "ZC456" and an identifier "Location 124" of the location 124 (e.g., received in the first request 118-1). The computing device 102 receives, in response to the query 812, data 814 that includes an historical delay time of the flight "ZC123" of "0 Mins" (e.g., zero minutes), that may be for a particular phase of the year in which the arrival time on May 1, 2024 is located (e.g., spring, and/or the month of May, and/or two weeks before and after May 1, and the like). The data 814 further includes a historical walking time from the airport terminal 128 to the location 124 of "45 Mins" (e.g., forty-five minutes), which may be from the gate 132 (e.g., while not depicted, the information 810 and/or the historical data 116 from which the data 814 is extracted, may indicate that flight "ZC456" may arrive at the gate 132).

While the process described with respect to the query 808, the second provider object 118-2, and the information 810 is described as being in response to receiving the subset of requests 118-x, such a process may occur for the requests 118 when received and stored in the requests 118, such that the computing device 102 may perform the search of the requests 118 via the query 802.

However, the process described with respect to the query 812 and the data 814 may occur after the first request 118-1 is received, as the query 812 to the historical database 110 includes the identifier "Location 124" of the location 124 as received in the first request 118-1.

FIG. 8 further depicts the computing device 102 determining the adjusted time 806 of "13:52", by adding the walking time of 45 minutes to the arrival time of "13:07". No historical delay time of the flight "ZC456" is added as the associated delay time is "0 Mins".

It is further understood that the processes described in FIG. 8 with respect to the second request 118-2 may occur for all the subset of requests 118-x, for example to find the particular second request 118-2 that has an adjusted time 806 within a given time period of the adjusted time 706.

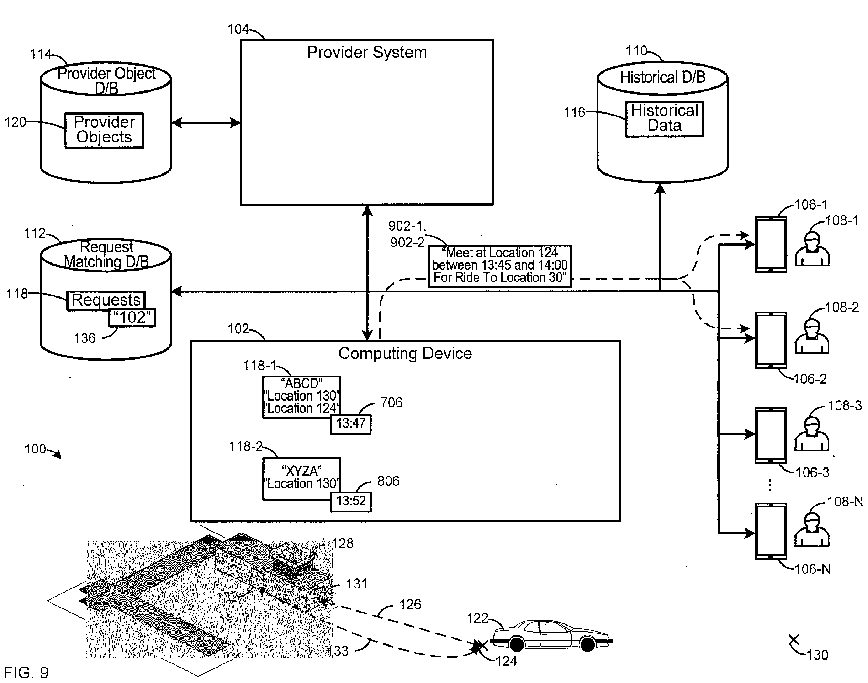

Attention is next directed to FIG. 9, which depicts the requests 118-1, 118-2 tagged with their respective adjusted times 706, 806 at the computing device 102. As also depicted in FIG. 2, the computing device 102 provides (e.g., at the block 310 of the method 300) to respective communication devices 106-1, 106-2 associated with the first request 118-1 and the second request 118-2, respective notifications 902-1, 902-2 (e.g., notifications 902 and/or a notification 902) of the match between the first request 118-1 and the second request 118-2 though, for simplicity, the notifications 902 are depicted as being the same. However, a first notification 902-1 is provided to the first communication device 106-1, and a second notification 902-2 is provided to the second communication device 106-2.

In particular, as depicted, the notifications 902 include an identifier "Location 124" of the location 124 of the vehicle 122, a time period (e.g., "13:50" to "14:00") that the users 108-1, 108-2 are to meet at the vehicle 122, and an identifier "Location 130" of the location 130 to which users 108-1, 108-2 are to travel via the vehicle 122. However, the notifications 902 may include any suitable information, and may be customized for the particular communication device 106 to which the notifications 902 are respectively provided.

Furthermore, the time period (e.g., "13:45" to "14:00") that the users 108-1, 108-2 are to meet at the vehicle 122, as identified in the notifications 902, may depend on the adjusted times 706, 806, and may, for example be selected by the computing device 102 to be a predetermined time period (e.g., such as 10 minutes, 15 minutes (e.g., as depicted), 20 minutes, amongst other possibilities) within which the adjusted times 706, 806 are located.

Presuming that the flights of the respective users 108-1, 108-2 are not delayed, such that the requests 118-1, 118-2 no longer match, the users 108-1, 108-2 are understood to meet at the location 124 (e.g., within the time period of "13:45" to "14:00") and travel to the location 130 via the vehicle 122.

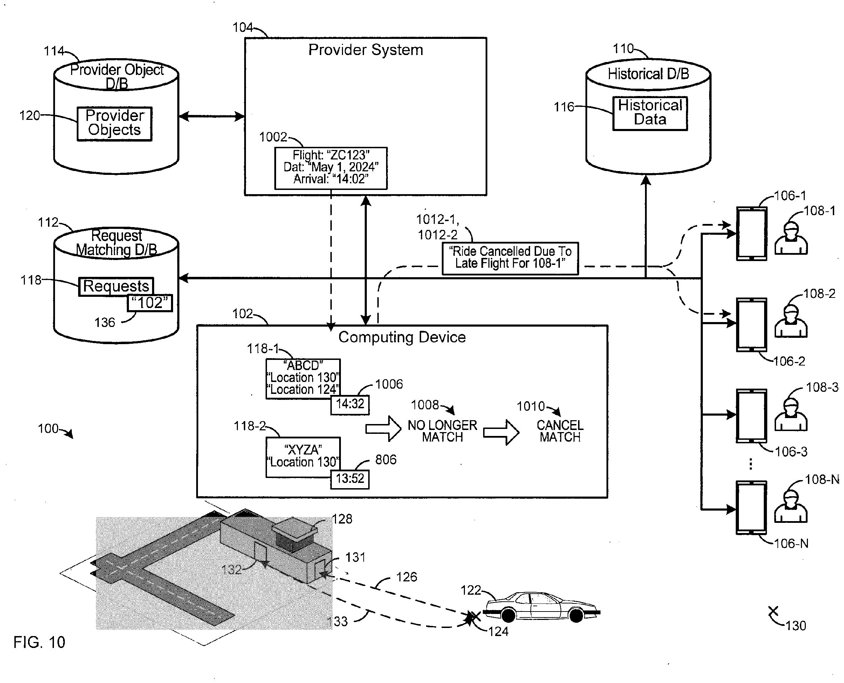

However, attention is next directed to FIG. 10, which depicts the computing device 102 receiving information 1002 (e.g., a notification) from the provider system 104 indicating that the flight "ZC123" associated with the first request 119-1 is late, with an updated arrival time of "14:02". Put another way, the computing device 102 receives (e.g., at the block 312 of the method 300) the information 1002 indicating that the first initial time of "13:02" has changed to a different first initial time of "14:02).

In response, the computing device 102 updates the first adjusted time 706 to a first updated adjusted time 1006 of "14:32" by adding the previously received walking time of "30 minutes" (e.g., received in the data 704) to the updated arrival time of "14:02". The historical delay time of "15 Mins", received in the data 704, is ignored as a precise delayed arrival time has been provided in the information 1002.

As such, the adjusted times 1006, 806 may no longer be within a given time period and hence the computing device 102 determines (e.g., a "YES" decision at the block 316 of the method 300), as indicated by a decision 1008 in FIG. 10, that the first request 118-1 and the second request 118-2 no longer match.

For example, as the first updated adjusted time 1006 is now forty minutes past the second adjusted time 806, for the users 108-1, 108-2 to meet at the location 124 of the vehicle 122, the second user 108-2 would have to wait about 40 minutes for the first user 108-2. As such, the computing device 102 cancels (e.g., at the block 320 of the method 300) the match between the first request 118-1 and the second request 118-2, as indicated by a decision 1010 in FIG. 10, and provides respective notifications 1012-1, 1012-2 (notifications 1012 and/or a notification 1012) of the cancellation to the respective communication devices 106-1, 106-2 associated with the requests 106-1, 106-2. In particular, the notifications 1012 indicate a reason why the ride to the location 130 was cancelled (e.g., due to the flight of the user 108-1 being late). However, the notifications 1012 may include any suitable information, and may be customized for the particular communication device 106 to which the notifications 1012 are respectively provided.

While not depicted, the computing device 102 may not automatically cancel the match between the first request 118-1 and the second request 118-2, and the notifications 1012 may alternatively provide electronic buttons for maintaining or cancelling the match, which may be selected, accordingly, at the communication devices 106-1 106-2. However, when only one user 108-1, 108-2 chooses to cancel the match, the match is cancelled. Furthermore, in these examples the match may be automatically cancelled by the computing device 102 when no reply is received to the notifications 1012 that include such electronic buttons for maintaining or cancelling the match. For example, the users 108-1, 108-2 may be on their respective flights and may not be able to respond to the notifications 1012.

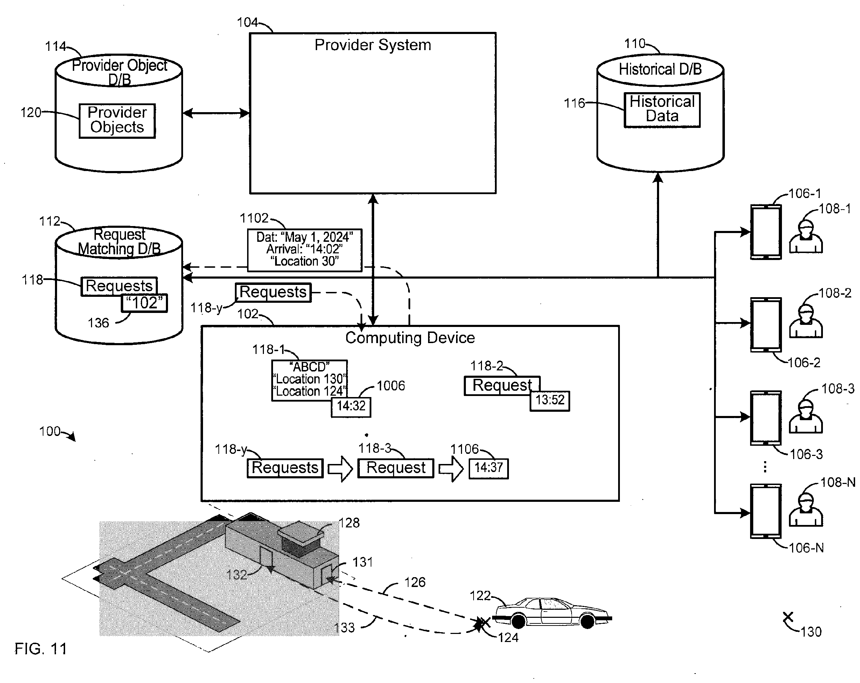

Attention is next directed to FIG. 11, which depicts the computing device 102 again attempting to match the first request 118-1 with another request 118 based on the updated adjusted time 1006 of "14:32". While details of such matching are not depicted in detail, it is understood that the computing device 102 accesses (e.g., at the block 322 of the method 300) the request matching database 112 by providing a query 1102 to the request matching database 112 that is similar to the query 802 but includes the updated arrival time of "14:02", and another subset of requests 118-y is returned accordingly, with associated arrival times within a given time period of the updated arrival time of "14:02". From the subset of requests 118-y, a third request 118-3 is selected that matches the first request 118-1, for example as an associated adjusted time 1106 of "14:37" is within a given time period of the updated adjusted time 1006 of "14:32".

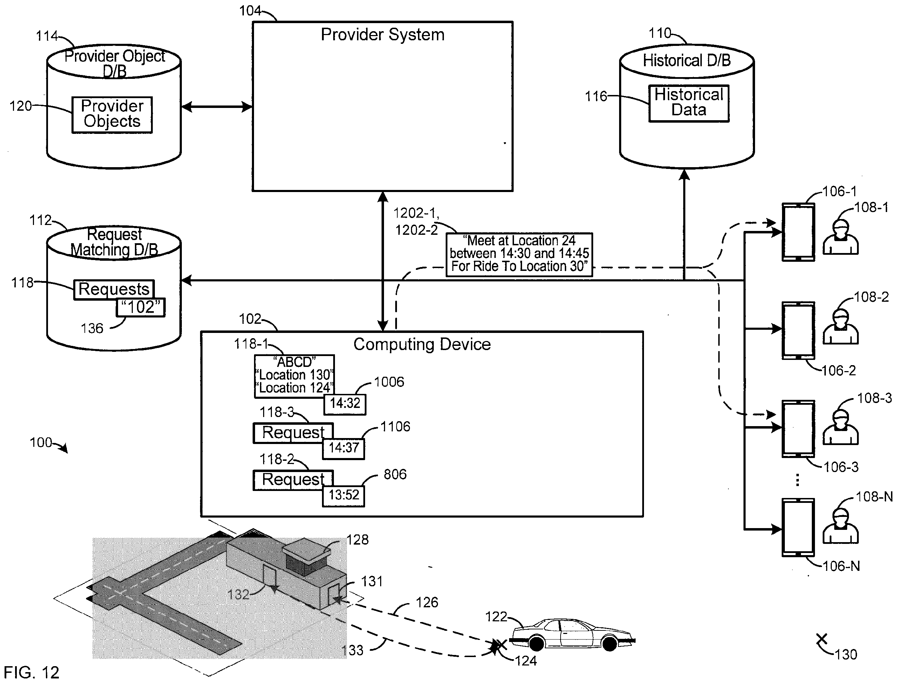

In the present example, it is assumed that the third request 118-3 is associated with the third communication device 106-3. As such, and with attention next directed to FIG. 12, the computing device 102 provides (e.g., at the block 312 of the method 3--) to respective communication devices 106-1, 106-3 associated with the first request 118-1 and the third request 118-3, respective notifications 1202-1, 1202-2 (e.g., notifications 1202 and/or a notification 1202) of the match between the first request 118-1 and the third request 118-3 though, for simplicity, the notifications 1202 are depicted as being the same. However, a first notification 1202-1 is provided to the first communication device 106-1, and a third notification 1202-3 is provided to the third communication device 106-3, and may be customized for the respective communication devices 106 to which the notifications 1202 are provided.

The notifications 1202 are similar to the notifications 902, however the time period is now "14:30" to "14:45", which includes the adjusted times 1006, 1106.

While not depicted, a similar process may occur to match the second request 118-2 with another request 118 that provides an offer of a ride to the location 130.

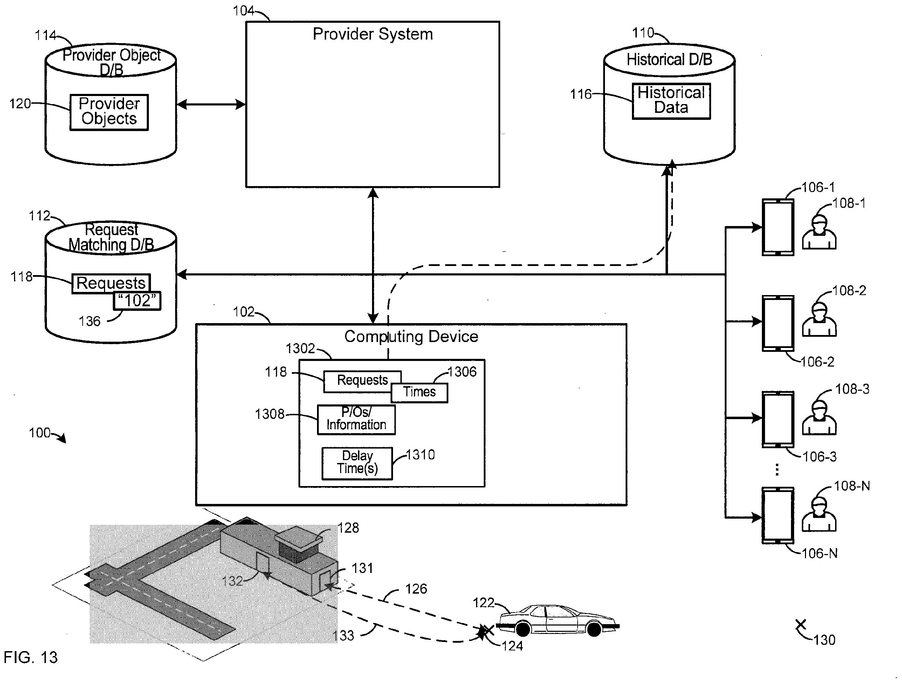

Attention is directed to FIG. 13, which depicts the computing device 102 updating the historical data 116 based on adjusted times as described herein.

For example, as depicted, the computing device 102 may collect information 1302 that includes one or more of: the requests 118 that were matched and/or unmatched in the implementation of the method 300 (e.g., the requests 118-1, 118-2, 118-3), associated adjusted times 1306 (e.g., adjusted times 706, 806, 1006, 1106), any associated provider objects 120 and/or information 1308 therefrom (e.g., the provider objects 120 associated with the requests 118-1, 118-2, 118-3, and/or any associated information, such as the information 604, 810, 1002, and the like), any associated delay times 1310 (e.g., times that a flight was delayed, times to travel from a gate 131, 132 to the location 124, times to pick up baggage, and the like. The information 1302 may be provided, as depicted, to the historical database 110 and information 1302 may be stored at the historical data 116, for example as new database entries, that may be used to assist with later implementations of the method 300. Such storage may make later implementation of the method 300 more efficient; for example, the delay of the flight "ZC123" may assist the computing device 102 with predicting later delays of the flight "ZC123" to obviate, or reduce, the possibility of having to cancel matches between requests 118. Alternatively, or in addition, the information 1302 may be used to train any suitable machine learning algorithms as described herein.

It is further understood that the method 300 may include yet further features.

For example, requests 118 that offer vehicles may include a maximum number of bags (e.g., luggage) that may be carried by a vehicle, and requests 118 that request rides in vehicles may indicate a number of bags being carried by a user 108. In these examples, requests 118 may be matched only when the number of bags being carried by a user 108 is less than the maximum number of bags that may be carried by a vehicle. Furthermore, when three or more requests 118 are matched, the computing device 102 may track a running total of bags associated with the requests 118, and decline any further request matching associated with a request 118 that offer vehicles when the total number of bags reaches the maximum number of bags.

In a further example, a location of a request 118 that requests a ride to the location may be different from a respective location of a request 118 that offers a ride to the respective location, however the computing device 102 may have access to a map of an area that includes such locations and match requests 118 when a location of a request 118 that requests a ride to the location is on a route to a respective location of a request 118 that offers a ride to the respective location. Hence, requests 118 may be matched when a first request 118 is offers a ride to the respective location and a second request 118 requests a ride to a second location on a route to the first location.

Furthermore, request matching by the computing device 102 may be based on demographics of users 108 associated with the requests 118. For example, the requests 118 may include ages and genders of respective users 108, and/or any other suitable information such as musical tastes, and the like, and/or such information may be stored in user records to which the computing device 102 has access. In these examples, when more than two requests 118 match according to destination locations and adjusted times, requests 118 may be further matched on the basis of demographics, such that requests 118 associated with users 108 of one or more of similar ages, similar and/or same genders, and/or similar musical tastes are matched.

In yet further examples, at least a user 108 that is requesting a ride to a location may pay a fee for the ride, and collection of the fee may occur via an entity that operates the aforementioned application at the communication devices 106 and/or manages the request matching database 112.

As should by now be apparent, the operations and functions of the devices described herein are sufficiently complex as to require their implementation on a computer system, and cannot be performed, as a practical matter, in the human mind. In particular, computing devices, and the lie, such as set forth herein are understood as requiring and providing speed and accuracy and complexity management that are not obtainable by human mental steps, in addition to the inherently digital nature of such operations (e.g., a human mind cannot interface directly with, RAM or other digital storage, cannot transmit or receive electronic messages, amongst other features and functions set forth herein).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that in some examples, the functionality of devices and/or methods and/or processes described herein may be implemented using pre-programmed hardware or firmware elements (e.g., application specific integrated circuits (ASICs), electrically erasable programmable read-only memories (EEPROMs), etc.), or other related components. In other examples, the functionality of the devices and/or methods and/or processes described herein may be achieved using a computing apparatus that has access to a code memory (not shown), which stores computer-readable program code for operation of the computing apparatus. The computer-readable program code could be stored on a computer readable storage medium, which is fixed, tangible and readable directly by these components, (e.g., removable diskette, CD-ROM, ROM, fixed disk, USB drive). Furthermore, it is appreciated that the computer-readable program may be stored as a computer program product comprising a computer usable medium. Further, a persistent storage device may comprise the computer readable program code. It is yet further appreciated that the computer-readable program code and/or computer usable medium may comprise a non-transitory computer-readable program code and/or non-transitory computer usable medium. Alternatively, the computer-readable program code could be stored remotely but transmittable to these components via a modem or other interface device connected to a network (including, without limitation, the Internet) over a transmission medium. The transmission medium may be either a non-mobile medium (e.g., optical and/or digital and/or analog communications lines) or a mobile medium (e.g., microwave, infrared, free-space optical or other transmission schemes) or a combination thereof.

Persons skilled in the art will appreciate that there are yet more alternative examples and modifications possible, and that the above examples are only illustrations of one or more examples. The scope, therefore, is only to be limited by the claims appended hereto.

## Claims

1. A method (300) comprising:
receiving (302), via a computing device (102), a first request (118) that includes a first provider object identifier of a first provider object (120), and a first location identifier;
retrieving (304), via the computing device (102), from one or more of a provider system (104) and a historical database (110), using the first provider object identifier, a first initial time associated with the first provider object (120);
adjusting (306), via the computing device (102), the first initial time based on historical data (116) retrieved from one or more of the provider system (104) and the historical database (110), to determine a first adjusted time that is different from the first initial time, the first adjusted time determined from data associated with the first provider object (120) stored at one or more of the provider system (104) and the historical database (110);
accessing (308), via the computing device (102), at least one request matching database (112) to match the first request (118) with a second request (118) based on the first adjusted time and the first location identifier, the second request (118) associated with: a second initial time or a second adjusted time; and a second location identifier;
providing (310), via the computing device (102), to respective communication devices associated with the first request (118) and the second request, respective notifications of the match between the first request (118) and the second request;
receiving (312), via the computing device (102), from the provider system (104), a notification that the first initial time has changed to a different first initial time;
updating (314), via the computing device (102), based on the different first initial time, the first adjusted time to a first updated adjusted time;
determining (316), via the computing device (102), that the first request (118) and the second request (118) no longer match; and, in response:
cancelling (320), via the computing device (102), the match between the first request (118) and the second request;
accessing (322), via the computing device (102), the at least one request matching database (112) to match the first request (118) with a third request (118) based on the first updated adjusted time and the first location identifier; and
providing (324), via the computing device (102), to the respective communication devices associated with the first request (118) and the third request, respective notifications of the match between the first request (118) and the third request.

2. The method (300) of claim 1, further comprising, in response to determining that the first request (118) and the second request (118) no longer match:
accessing, via the computing device (102), the at least one request matching database (112) to match the second request (118) with a fourth request (118) based on the second adjusted time, or the second initial time, and the second location identifier; and
providing, via the computing device (102), to the respective communication devices associated with the second request (118) and the fourth request, respective notifications of the match between the second request (118) and the fourth request.

3. The method (300) of claim 1 or 2, wherein cancelling the match between the first request (118) and the second request (118) comprises:
providing to the respective communication devices associated with the first request (118) and the second request, respective updated notifications that the first request (118) and the second request (118) no longer match, the respective updated notifications including the first updated adjusted time;
receiving from one or more of the respective communication devices associated with the first request (118) and the second request, a cancel request to cancel the match between the first request (118) and the second request; and
cancelling the request in response to receiving the cancel request.

4. The method (300) of claim 3, further comprising, in response to providing to the respective communication devices associated with the first request (118) and the second request, the respective updated notifications that the first request (118) and the second request (118) no longer match:
receiving a maintain request from one or both of the respective communication devices associated with the first request (118) and the second request; and
maintaining the match between the first request (118) and the second request.

5. The method (300) of any one of claims 1 to 4, further comprising:
receiving the second request (118) that includes a second provider object identifier of a second provider object (120), and the second location identifier;
retrieving, via the computing device (102), from one or more of a respective provider system (104) and the historical database (110), using the second provider object identifier, the second initial time associated with the second provider object (120); and
adjusting, via the computing device (102), the second initial time based on respective historical data (116) retrieved from one or more of the respective provider system (104) and the historical database (110), to determine the second adjusted time that is different from the second initial time, and
wherein the match between the first request (118) and the second request (118) is based on the second adjusted time.

6. The method (300) of any one of claims 1 to 5, wherein the first request (118) identifies a given request matching database (112), and accessing the at least one request matching database (112) to match the first request (118) with the second request (118) comprises accessing on the given request matching database (112) identified in the first request.

7. The method (300) of any one of claims 1 to 6, further comprising:
tagging the first request (118) and the second request, stored at the at least one request matching database (112), with an identifier of the computing device (102), to one or more of: enable access of the computing device (102) to the first request (118) and the second request, stored at the at least one request matching database (112); and cause prioritization of matching between the first request (118) and the second request (118) over other requests not tagged with the identifier of the computing device (102).

8. The method (300) of any one of claims 1 to 7, wherein adjusting the first initial time based on the historical data (116) retrieved from one or more of the provider system (104) and the historical database (110), to determine the first adjusted time comprises adding one or more time periods to the first initial time, the one or more time periods comprising one or more of:
a first time period determined from historical changes to the first initial time;
a second time period associated with a phase in which the first initial time is located; and
a third time period associated with a displacement between an initial location associated with the first initial time and a first location associated with the first location identifier.

9. The method (300) of any one of claims 1 to 8, wherein the respective notifications of the match between the first request (118) and the second request (118) include a blackout communication time period based on the first provider object (120).

10. The method (300) of any one of claims 1 to 9, further comprising:
updating the historical data (116) based on adjusted times.

11. A computing device (102) comprising:
a controller (202); and
a computer-readable storage medium (204) having stored thereon program instructions (206) that, when executed by the controller (202), causes the controller (202) to perform a set of operations comprising the method (300) of any one of claims 1 to 10.

12. A non-transitory computer-readable storage medium (204) having stored thereon program instructions (206) that, when executed by at least one computing device (102), causes the at least one computing device (102) to perform the method (300) of any one of claims 1 to 10.
